# EUROPÄISCHE PATENTSCHRIFT

(11) **EP 2 183 145 B1**
(45) Veröffentlichungstag und Bekanntmachung des Hinweises auf die Patenterteilung: **16.11.2011**
(21) Anmeldenummer: 08803705.6
(22) Anmeldetag: 05.09.2008
(51) Int. Cl.: B61F 19/04, B60R 19/26, B61D 15/06

(54) **STOßSICHERUNG FÜR DEN FRONT- ODER HECKBEREICH EINES SPURGEFÜHRTEN FAHRZEUGES MIT MINDESTENS EINER ENERGIEVERZEHREINRICHTUNG**
SHOCK-PROOF DEVICE FOR THE FRONT OR REAR REGION OF A TRACK-GUIDED VEHICLE HAVING AT LEAST ONE ENERGY CONSUMPTION DEVICE
DISPOSITIF ANTICHOC POUR LA ZONE AVANT OU ARRIÈRE D'UN VÉHICULE GUIDÉ SUR RAILS, COMPORTANT AU MOINS UN DISPOSITIF D'ABSORPTION D'ÉNERGIE

(30) Priorität: 05.09.2007 EP 07017390
(43) Veröffentlichungstag der Anmeldung: 12.05.2010
(73) Patentinhaber: Voith Patent GmbH, 89522 Heidenheim (DE)
(72) Erfinder: MATTSCHULL, Volker, 38106 Braunschweig (DE)
(74) Vertreter: Rupprecht, Kay
(86) Internationale Anmeldenummer: PCT/EP2008/061735
(87) Internationale Veröffentlichungsnummer: WO 2009/030736

(56) Entgegenhaltungen:
- DE-A1- 2 104 797
- DE-A1- 4 303 549

## Beschreibung

Die Erfindung betrifft eine Energieverzehrvorrichtung für eine Stoßsicherung für ein spurgeführtes Fahrzeug, insbesondere Straßenbahnfahrzeug, wobei die Energieverzehrvorrichtung ausgelegt ist, die bei einem Aufprall des Fahrzeuges auf ein Hindernis anfallende Stoßenergie zumindest teilweise zu absorbieren bzw. abzubauen. Des Weiteren betrifft die Erfindung eine Stoßsicherung für den Front- oder Heckbereich eines spurgeführten Fahrzeuges, insbesondere Straßenbahnfahrzeuges, wobei die Stoßsicherung mindestens eine zuvor genannte Energieverzehrvorrichtung aufweist, die im Front- oder Heckbereich des Fahrzeuges mit dem Fahrzeuguntergestell verbindbar ist.

Solche Stoßsicherungen Sind durch DE 4303 549 A oder DE 2104797 A bekannt.

Es ist bekannt, spurgeführte Fahrzeuge, wie beispielsweise Schienenfahrzeuge, mit einer Stoßsicherung auszurüsten, die mindestens eine Energieverzehrvorrichtung aufweist, welche dazu dient, die bei einem Aufprall des Fahrzeuges auf ein Hindernis anfallende Stoßenergie zumindest teilweise abzubauen. In der Regel weist eine in einer Stoßsicherung zum Einsatz, kommende Encrgieveraehrvorrichtung eine oder mehrere Energieverzehreinrichtungen auf. Die destruktiv ausgebildete Energieverzehreinrichtung soll das Untergestell des spurgeführten Fahrzeuges insbesondere auch bei größeren Auffahrgeschwindigkeiten schützen.

Zusätzlich zu der mindestens einen destruktiv ausgebildeten Energieverzehreinrichtung kann ferner eine regenerativ ausgebildete Energieverzehreinrichtung vorgesehen sein, welche üblicherweise zum Abdämpfen von im normalen Fahrbetrieb auftretenden Stoßkräften dient.

In herkömmlichen Stoßsicherungen ist die regenerativ ausgebildete Energieverzehreinrichtung dahingehend ausgelegt, die im normalen Fahrbetrieb auftretenden Zug- und Stoßkräfte abzudämpfen, wobei das Dämpfungsvermögen der regenerativ ausgebildeten Energieverzehreinrichtung oftmals nur bis zu einer festgelegten Maximalkraft ausgelegt ist. Mit anderen Worten, nach dem Überschreiten der Betriebslast der regenerativ ausgebildeten Energieverzehreinrichtung, wie etwa beim Aufprall des Fahrzeuges auf ein Hindernis (Crashfall), reicht die regenerativ ausgebildeten Energieverzehreinrichtung in der Regel nicht für einen Verzehr der insgesamt anfallenden Stoßenergie aus.

Damit in solch einem Fall die anfallende Stoßenergie möglichst nicht zu Belastungen führt, kommt beispielsweise zusätzlich zu der regenerativ ausgebildeten Energieverzehreinrichtung noch eine destruktiv ausgebildete Energieverzehreinrichtung zum Einsatz, welche der regenerativ ausgebildeten Energieverzehreinrichtung nachgeschaltet und derart ausgelegt ist, dass sie nach Ausschöpfen des Arbeitsverzehrs der regenerativ ausgebildeten Energieverzehreinrichtung anspricht und dann die durch den Kraftfluss über die Energieverzehrvorrichtung übertragene Energie zumindest teilweise absorbiert und abbaut.

Als destruktiv ausgebildete Energieverzehreinrichtung kommen beispielsweise Verformungsrohre oder Crashboxen in Frage, bei denen durch eine definierte Verformung in destruktiver Weise Stoßenergie in Verformungsarbeit und Wärme umgewandelt werden kann. Ein Verformungsrohr, welches in einer Stoßsicherung als destruktiv ausgebildete Energieverzehreinrichtung zum Einsatz kommt, zeichnet sich beispielsweise dadurch aus, dass es eine definierte Ansprechkraft ohne Kraftspitzen aufweist.

Als regenerativ ausgebildete Energieverzehreinrichtungen sind Puffer mit einer regenerativen bzw. selbstrestaurierenden Arbeitsweise, wie beispielsweise gashydraulische Puffer bekannt. Eine auf einer gashydraulischen Arbeitsweise basierende Energieverzehreinrichtung weist im Vergleich zu einem Verformungsrohr eine relativ geringe Ansprechkraft auf und reagiert - im Gegensatz zu einem Verformungsrohr - geschwindigkeitsabhängig. Andererseits ist als regenerativ ausgebildete Energieverzehreinrichtung auch eine auf einer hydrostatischen Arbeitsweise basierende Energieverzehreinrichtung bekannt, wie etwa ein gashydraulischer Puffer, welcher ebenso regenerativ, d.h. selbstrestaurierend wirkt. Hydrostatisch arbeitende Energieverzehreinrichtungen haben im Gegensatz zu gashydraulisch arbeitenden Energieverzehreinrichtungen eine höhere Ansprechkraft und Vorspannung.

In der Schienenfahrzeugtechnik besteht seit längerem das Bestreben, für den Schutz des Untergestells eines spurgeführten Fahrzeuges vor extremen, insbesondere in einem Crashfall auftretenden Belastungen eine Stoßsicherung anzugeben, mit der beispielsweise in einem Crashfall in definierter Weise und nach einem vorhersehbaren Ereignisablauf zumindest ein Teil der bei der Übertragung von Stoßkräften auftretenden Stoßenergie wirkungsvoll abgebaut werden kann. Sowohl für ein definiertes Ansprechverhalten als auch für einen vorab festlegbaren Ereignisablauf beim Energieverzehr ist es erforderlich, dass die abzudämpfende Stoßkraft und somit die bei der Stoßkraftübertragung anfallende Energie möglichst axial in die Energieverzehreinrichtung(en) der in der Stoßsicherung vorgesehenen Energieverzehrvorrichtung(en) eingeleitet wird. Dies ist darauf zurückzuführen, dass eine üblicherweise in einer Stoßsicherung zum Einsatz kommende Energieverzehrvorrichtung eine Energieverzehreinrichtung, wie beispielsweise ein Verformungsrohr oder eine Crashbox, aufweist, wobei diese Energieverzehreinrichtung in der Regel nur dann in vorhersehbarer Weise Kräfte absorbieren kann, wenn diese axial in die Energieverzehreinrichtung eingeleitet werden.

Kommt beispielsweise als Energieverzehreinrichtung ein Verformungsrohr oder eine Crashbox zum Einsatz, besteht - wenn nicht-axiale Kräfte in das Verformungsrohr eingeleitet werden - die Gefahr eines "Festfressens" bzw. Verkeilens und Verkantens, mit dem Ergebnis, dass einerseits das Ansprechverhalten der Energieverzehreinrichtung und andererseits der Ereignisablauf beim Energieverzehr nicht mehr vorhersehbar sind.

Diese für eine wirkungsvolle Funktionsweise einer Energieverzehreinrichtung notwendigen Randbedingungen sind bei spurgeführten Fahrzeugen, wie etwa Schienenfahrzeugen, oftmals von Natur aus gegeben, da sich ein auf einer Gleisstrecke bewegendes Schienenfahrzeug, wie etwa ein Regionalverkehrszug oder ein Hochgeschwindigkeitszug, in der Regel immer nahezu frontal einem auf der Gleisstrecke liegenden Hindernis nähert, so dass auch die bei einem Aufprall auf dieses Hindernis auftretende Stoßenergie quasi "automatisch" axial in die Energieverzehreinrichtung der in der Stoßsicherung vorgesehenen Energieverzehrvorrichtung eingeleitet wird, da in der Regel die Vorzugsrichtung der Energieverzehreinrichtung beim Energieverzehr mit der Längsrichtung des Schienenfahrzeuges übereinstimmt.

Ein Sonderfall allerdings stellen beispielsweise Straßenbahnen dar, also spur- und im Einzelnen schienengeführte Fahrzeuge, welche zumindest teilweise im üblichen Straßenverkehr eingebunden sind. Bei derartigen Fahrzeugen ist die Randbedingung, wonach ein Zusammenstoß mit einem Hindernis in der Regel frontal auftritt, nicht mehr automatisch erfüllt. Wenn beispielsweise ein PKW beim Abbiegen im Stadtverkehr mit einer entgegenkommenden Straßenbahn kollidiert, stößt dieser oftmals nicht frontal, sondern von vorne kommend schräg seitlich mit der Straßenbahn zusammen. In derartigen Situationen kann keinesfalls mehr von einem frontalen oder im Wesentlichen frontalen Zusammenstoß die Rede sein.

Demnach liegt der Erfindung die Problemstellung zugrunde, dass im Hinblick auf den Verzehr von in einem Crashfall auftretender Stoßenergie die herkömmlichen, beispielsweise aus der Schienenfahrzeugtechnik bekannten und schon etwa bei Regionalverkehrs-oder Hochgeschwindigkeitszügen erfolgreich eingesetzten Lösungen nicht oder zumindest nicht hinreichend geeignet sind, die bei einem nicht-axialen und insbesondere seitlichen Zusammenstoß des Fahrzeuges auf ein Hindernis anfallende Stoßenergie wirksam, d.h. gemäß einem vorhersehbare Ereignisablauf, zu absorbieren bzw. abzubauen.

Ausgehend von dieser Problemstellung liegt somit der Erfindung die Aufgabe zugrunde, eine Energieverzehrvorrichtung der eingangs genannten Art derart weiterzubilden, dass auch die bei einem seitlichen Zusammenstoß des Fahrzeuges auf ein Hindernis auftretende Stoßenergie nach einem vorab festlegbaren Ereignisablauf absorbiert bzw. abgebaut werden kann.

Diese Aufgabe wird mit dem Gegenstand des Patentanspruches 1 gelöst. Vorteilhafte Weiterbildungen der erfindungsgemäßen Lösung sind in den abhängigen Patentansprüchen angegeben.

Demnach wird erfindungsgemäß eine Energieverzehrvorrichtung vorgeschlagen, welche einen Stoßbügel aufweist, der über ein erstes Lager schwenkbar mit dem Fahrzeuguntergestell des spurgeführten Fahrzeuges verbindbar bzw. verbunden ist, und welche ferner eine Pendelstütze mit einem ersten und einem zweiten Endabschnitt aufweist, wobei die Pendelstütze derart mit ihrem ersten Endabschnitt über ein zweites Lager mit dem Stoßbügel verbunden und mit ihrem zweiten Endabschnitt über ein drittes Lager mit dem Fahrzeuguntergestell verbindbar bzw. verbunden ist, dass der Stoßbügel und die Pendelstütze ein Dreibein bilden. Ferner ist eine Energieverzehreinrichtung vorgesehen, welche derart ausgebildet und in der Energieverzehrvorrichtung angeordnet ist oder mit der Energieverzehrvorrichtung zusammenwirkt, dass bei einem Verschwenken des Stoßbügels um eine mit dem ersten Lager definierte Schwenkachse das daraus resultierende Kraftmoment als Linearkraft in die Energieverzehreinrichtung eingeleitet und dort zumindest teilweise absorbiert bzw. abgebaut wird.

Die mit der erfindungsgemäßen Lösung erzielbaren Vorteile zeigen sich insbesondere dann, wenn die Funktionsweise der vorgeschlagenen Energieverzehrvorrichtung betrachtet wird. Dadurch, dass der Stoßbügel und die Pendelstütze ein Dreibein bilden, wird eine auf den Stoßbügel wirkende Kraft zunächst derart umgelenkt, dass der Kraftfluss axial durch die Pendelstütze verläuft. Somit ist es denkbar, die Energieverzehreinrichtung in der Pendelstütze zu integrieren oder der Pendelstütze nachzuschalten. Auf diese Weise kann sichergestellt werden, dass der axial durch die Pendelstütze laufende Kraftfluss grundsätzlich hinsichtlich der Vorzugsrichtung der Energieverzehreinrichtung ausgerichtet, d.h. linear, in die Energieverzehreinrichtung eingeleitet wird. Anschließend wird die Energie des als Längskraft in die Energieverzehreinrichtung eingeleiteten Krafttlusses zumindest teilweise umgewandelt und somit "vernichtet".

Die erfindungsgemäße Lösung ermöglicht somit auch eine Umlenkung der bei einem seitlichen Zusammenprall auftretenden Querkräfte. Dies erfolgt erfindungsgemäß mit Hilfe des statisch bestimmten Dreibeins, welches sich im Wesentlichen aus dem Stoßbügel als erster Schenkel des Dreibeins und der Pendelstütze als zweiter Schenkel des Dreibeins zusammensetzt, wobei der Stoßbügel und die Pendelstütze über ein Lager (zweites Lager) miteinander verbunden sind.

Im Einzelnen ist der Stoßbügel an seinem ersten Ende über ein erstes Lager schwenkbar mit dem Fahrzeuguntergestell verbunden, während an seinem zweiten Ende über ein zweites Lager die Pendelstütze mit ihrem Kopfabschnitt (erster Endbereich) angelenkt ist. Der Fußabschnitt (zweiter Endbereich) der Pendelstütze ist über ein drittes Lager mit dem Fahrzeuguntergestell verbunden, wobei das erste Lager und das dritte Lager voneinander beabstandet sind und auf diese Weise ein statisch bestimmtes Dreibein ausgebildet wird. Die Pendelstütze ist dabei derart ausgebildet, dass diese bis zu einem kritischen Betrag einer in Längsrichtung der Pendelstütze übertragenen Kraft im Wesentlichen starr ist und sich bei Überschreiten des kritischen Kraftbetrages verkürzt und somit eine Relativbewegung der Endbereiche der Pendelstütze aufeinander zu ermöglicht.

Denkbar hierbei ist beispielsweise ein teleskopartiger Aufbau der Pendelstütze mit einem Stützgehäuse, einem darin aufgenommenen Krattübertragungsglied sowie ggf. einem ebenfalls in dem Stützgehäuse aufgenommenen Dämpfungselement, beispielsweise in Gestalt einer Feder oder eines sogenannten Elastomerkörpers. Bei einem derartigen Aufbau kommt dem Dämpfungsgehäuse die Funktion der Längsführung zu, während das in dem Puffergehäuse aufgenommene Dämpfungselement zur Kraftübertragung in Längsrichtung dient.

Auch ist für die Pendelstütze ein Aufbau denkbar, bei welchem beispielsweise eine auf einer hydrostatischen oder gashydraulischen Arbeitsweise basierende Energieverzehreinrichtung oder eine destruktiv ausgelegte Energieverzehreinrichtung zum Einsatz kommt. So kann zum Beispiel in der Pendelstütze eine destruktiv oder regenerativ arbeitende Energieverzehreinrichtung oder eine Kombination aus destruktiv und regenerativ arbeitenden Energieverzehreinrichtungen integriert sein. Gleichwohl kann/können die Energieverzehreinrichtung(en) als Teil der Pendelstütze ausgebildet sein.

Der Rückhub der Pendelstütze, d.h. die Verkürzung der Pendelstütze bei der Relativbewegung der Endbereiche der Pendelstütze nach Überschreiten des kritischen Kraftbetrages, entspricht - wenn als Pendelstütze eine regenerative arbeitende Energieverzehreinrichtung zum Einsatz kommt bzw. in der Pendelstütze integriert ist - dem Pufferhub, d.h. dem Federweg der Energieverzehreinrichtung (des Dämpfungselements). Wenn als Pendelstütze eine destruktiv arbeitende Energieverzehreinrichtung, wie beispielsweise ein Verformungsrohr, zum Einsatz kommt bzw. in der Pendelstütze integriert ist, entspricht der Rückhub der Pendelstütze der aufgrund einer plastischen Verformung auftretenden Verkürzung der Energieverzehreinrichtung. Nach Erreichen des maximalen Rückhubes ist die Dämpfungseigenschaft der Pendelstütze bzw. der mit der Pendelstütze maximal erzielbare Energieverzehr ausgeschöpft, infolgedessen die über die charakteristische Betriebslast der Pendelstütze hinausgehenden Stoßkräfte über das dritte Lager in das Fahrzeuguntergestell weitergeleitet werden.

Die Erfindung ist allerdings nicht auf Pendelstützen beschränkt, die sich bei Überschreiten eines kritischen Kraftbetrages verkürzen. Grundsätzlich ist es auch denkbar, dass eine einteilige Pendelstütze verwendet wird, in der keine Energieverzehreinrichtung integriert ist, und wobei eine Verkürzung der Pendelstütze nach Überschreiten eines kritischen Krattbetrages nicht vorgesehen ist. In diesem Fall kann eine Energieverzehreinrichtung der Pendelstütze nachgeschaltet sein, indem beispielsweise die Energieverzehreinrichtung über das dritte Lager mit der Pendelstütze verbunden sein. In solch einem Fall würde die von dem Stoßbügel auf die Pendelstütze übertragene Kraft durch das dritte Lager als Linearkraft in die Energieverzehreinrichtung eingeleitet werden.

Dadurch, dass erfindungsgemäß der Stoßbügel an seinem ersten Ende über das erste Lager schwenkbar mit dem Fahrzeuguntergestell und an seinem zweiten Ende über ein zweites Lager schwenkbar mit der Pendelstütze verbunden ist, wird eine auf den Stoßbügel einwirkende Stoßkraft zunächst in die Pendelstütze eingeleitet. Überschreitet die in die Pendelstütze eingeleitete Stoßkraft den für das Verkürzen der Pendelstütze charakteristisehen Kraftbetrag, findet unter gleichzeitiger Verkürzung der Pendelstütze ein Verschwenken des Stoßbügels um eine mit dem ersten Lager definierte Schwenkachse statt. Wie bereits angedeutet, ist es denkbar, dass in der Pendelstützen eine Energieverzehreinrichtung integriert ist. Da die in die Pendelstütze eingeleitete Stoßkraft stets in Längsrichtung der Pendelstütze verläuft, wird sichergestellt, dass die in der Energieverzehreinrichtung abzudamptellde Stoßkraft axial in die in der Pendelstütze integrierten Energieverzehreinrichtung eingeleitet wird.

Alternativ oder zusätzlich zu einer in der Pendelstütze integrierten Energieverzehreinrichtung ist es selbstverständlich auch denkbar, dass eine ggf. zusätzliche Energieverzehreinrichtung der Pendelstütze nachgeschaltet ist. Beispielsweise kann die Energieverzehreinrichtung über das dritte Lager mit der Pendelstütze verbunden sein. In solch einem Fall würde die von dem Stoßbügel auf die Pendelstütze übertragene Kraft durch das dritte Lager als Linearkraft in die Energieverzehreinrichtung eingeleitet werden.

Die zum Ausbilden des sich aus dem Stoßbügel und der Pendelstütze zusammensetzenden Dreibein verwendeten Lager sind jeweils Lager, welche das entsprechende Bauteil (Stoßbügel bzw. Pendelstütze) in drei Translationsfreiheitsgraden fixieren. Die Reaktionen der bei der erfindungsgemäßen Lösung zum Einsatz kommenden ersten, zweiten und dritten Lager sind die Normalkraft, die Tangentialkraft und die Vertikalkraft, wobei diese Lager jeweils eine Drehung um zumindest eine Drehachse zulassen. Die zumindest eine Drehachse kann (muss aber nicht) vertikal verlaufen.

Um zu erreichen, dass der Stoßbügel erst bei einer (kritischen) Stoßkraft in die Fahrzeugkontur eingeschwenkt wird, ist in einer bevorzugten Realisierung der erfindungsgemäßen Lösung vorgesehen, dass die Pendelstütze ein Energieverzehrelement aufweist, welches bis zu einem vorab festlegbaren, als Linearkraft in das Energieverzehrelement eingeleiteten charakteristischen Kraftbetrag im wesentlichen starr ist und somit eine Verschwenkung des Stoßbügels um die mit dem ersten Lager definierte Drehachse verhindert. Erst nach Überschreiten des für das Ansprechen des Energieverzehrelements charakteristischen Kraftbetrags tritt eine Verkürzung der Pendel stütze auf, infolgedessen eine Verschwenkung des Stoßbügels um die mit dem ersten Lager definierte Drehachse möglich ist, wobei das aufgrund der Verschwenkung des Stoßbügels auftretende Drehmoment als Linearkraft in das Energieverzehrelement eingeleitet und die entsprechende Stoßenergie zumindest teilweise absorbiert bzw. abgebaut wird.

Für die Realisierung des bei der erfindungsgemäßen Lösung verwendeten Energieverzehrelements kommen unterschiedliche Lösungen in Frage. So ist es beispielsweise denkbar, als Energieverzehrelement ein Verformungsrohr einzusetzen, da dieses ein vorab festlegbares Ansprechverhalten bei einem maximal mögliche Energieverzehr aufweist. Selbstverständlich kann als Energieverzehrelement allerdings auch ein regenerativ ausgebildetes Bauteil, wie etwa ein auf einer gashydraulischen Arbeitsweise oder ein auf einer hydrostatischen Arbeitsweise basierendes Energieverzehrelement verwendet werden. Denkbar wäre auch eine Kombination aus einem regenerativ ausgebildeten Bauteil und einem destruktiv ausgebildeten Bauteil.

Damit der Front- bzw. Heckbereich eines spurgeführten Fahrzeuges möglichst vollständig vor starken Beschädigungen auch bei einem seitlichen Aufprallunfall geschützt werden kann, bietet es sich an, die erfindungsgemäße Energieverzehrvorrichtung in dem Front- bzw. Heckbereich des Fahrzeuges einzusetzen, wobei es bevorzugt ist, wenn der Stoßbügel eine an die Außenkontur der Bugnase des Fahrzeuges angepasste Formgebung aufweist. Damit kann erreicht werden, dass in einem Crashfall die auftretende und von der Energieverzehrvorrichtung zu verzehrende Stoßenergie möglichst direkt in den Stoßbügel eingeleitet und als Linearkraft an das Energieverzehrelement weitergegeben wird.

Besonders bevorzugt sind im Front- oder Heckbereich eines spurgeführten Fahrzeuges zwei Energieverzehrvorrichtungen angeordnet, die vorzugsweise symmetrisch zur vertikalen Mittenlängsebene an beiden Seiten der Stirnseite des Fahrzeuges jeweils seitlich von der vertikalen Mittenlängsebene beabstandet angeordnet sind. Hierbei handelt es sich um eine Lösung, bei welcher der Front- bzw. Heckbereich des Fahrzeuges vollständig vor größeren Beschädigungen bei seitlichen Aufprallunfällen geschützt ist. Die Stoßbügel der beiden Energieverzehrvorrichtungen sollten dabei die seitlichen Flanken des Front- bzw. Heckbereiches entsprechend abdecken, um einen hinreichenden Schutz zu gewährleisten.

In einer bevorzugten Weiterentwicklung der erfindungsgemäßen Lösung ist als zusätzlicher Schutz vor Beschädigungen vorgesehen, dass die Energieverzehrvorrichtung ein in der Pendelstützen integriertes erstes Energieverzehrelement und ein der Pendelstlltze nachgeschaltetes zweites Energieverzehreiement aufweist, welches vorzugsweise fahrzeugmittig befestigt und ausgelegt ist, nach Erreichen eines bestimmten Rückhubes der Pendelstütze anzusprechen und zumindest einen Teil der aufgrund eines Stoßes durch das erste Energieverzehrelement übertragenen und in das zweite Energieverzehrelement eingeleiteten Energie zu absorbieren bzw. abzubauen.

Für das zweite Energieverzehrelement bietet sich insbesondere ein Verformungsrohr oder eine Crashbox an, welches bzw. welche ausgelegt ist, nach Erreichen eines bestimmten Rückhubes der Pendelstütze und nach Überschreiten des für das zweite Energieverzehrelement charakteristischen Kraftbetrages anzusprechen und durch eine definierte plastische Verformung zumindest einen Teil der aufgrund des Stoßes übertragenen Energie in Verformungsarbeit und Wärme umzuwandeln und somit abzubauen. Für das zweite Energieverzehrelement kommt grundsätzlich aber auch ein regenerativ ausgebildetes Energieverzehrelement oder eine Kombination aus einem destruktiv und einem regenerativ ausgebildeten Energieverzehrelement in Frage.

Das zuvor beschriebene Nachschalten eines zweiten Energieverzehrelements erfolgt in einer bevorzugten Realisierung der erfindungsgemäßen Lösung dadurch, dass der zweite Endbereich der Pendelstütze über das dritte Lager derart verbunden ist, dass bei einem Verschwenken des Stoßbügels um eine mit dem ersten Lager definierte Schwenkachse das daraus resultierende Kraftmoment zumindest teilweise als Linearkraft über die Pendelstütze in das mindestens eine zweite Energieverzehrelement eingeleitet wird. Denkbar ist dabei, dass das zweite Energieverzehrelement direkt oder indirekt über ein Kraftübertragungselement mit dem dritten Lager verbunden ist.

Zum definierten Einleiten von Stoßkräften in den Stoßbügel ist vorzugsweise eine mit dem Stoßbügel verbundene Kontaktfläche vorgesehen, wobei die Kontaktfläche zumindest einen Bereich mit einer konvex ausgebildeten Außenkontur aufweist. Im Einzelnen ist es vorteilhaft, wenn der mindestens eine Bereich der Kontaktfläche als Kreisbogen ausgeführt ist, dessen Mittelpunkt auf einer mit dem zweiten Lager definierten Schwenkachse liegt. Ferner ist es bevorzugt, wenn die Kontaktfläche zumindest einen Bereich mit einer Profilierung aufweist zum Bereitstellen eines Aufkletterschutzes.

In einer bevorzugten Realisierung der erfindungsgemäßen Lösung kommen insgesamt zwei Energieverzehrvorrichtungen der vorstehend beschriebenen Art zum Einsatz, wobei diese Energieverzehrvorrichtungen vorzugsweise symmetrisch zur Fahrzeugslängsachse im Front- oder Heckbereich des Fahrzeuges mit dem Fahrzeuguntergestell derart verbunden sind, dass die Stoßbügel zumindest teilweise der Außenkontur des Front- oder Heckbereiches entsprechen. Auf diese Weise kann eine Stoßsicherung für den Front- oder Heckbereich eines spurgeführten Fahrzeuges, insbesondere Straßenbahnfahrzeuge ausgebildet werden. Aufgrund der seitlich angeordneten Energieverzehrvorrichtungen kann die bei einem seitlichen Aufprall des Fahrzeuges auf ein Hindernis anfallende Stoßenergie zumindest teilweise mit Hilfe der entsprechenden Energieverzehrvorrichtung absorbiert bzw. abgebaut werden.

Damit bei der zuvor beschriebenen Stoßsicherung bei einem seitlichen Aufprall ein Stoßbügel die zuvor beschriebene Schwenkbewegung um eine mit dem zugehörigen ersten Lager definierte Schwenkachse ausführen kann, ist Sorge zu tragen, dass sich die Stoßbügel der beiden Energieverzehrvorrichtungen beim Verschwenken nicht gegenseitig behindern und für beide Stoßbügel jeweils ein freier Schwenkbereich gegeben ist, der beim Ansprechen der Energieverzehrvorrichtungen von den zugehörigen Stoßbügeln jeweils überstrichen wird. Dies lässt sich besonders leicht realisieren, indem beispielsweise zwischen den Endbereichen der Stoßbügel, die nicht über das erste Lager mit dem Wagenkasten verbunden sind, ein Freiraum gelassen wird.

Allerdings besteht bei der zuvor beschriebenen Stoßsicherung die Gefahr, dass bei einem frontalen Aufprall auf ein Hindernis in den Freiraum zwischen den nicht angelenkten Endbereichen der Stoßbügel Objekte eindringen können. Diese Objekte können, da sie nicht von den Stoßbügeln der beiden Energieverzehrvorrichtungen erfasst werden, unter Umständen in den Wagenkasten des Fahrzeuges ungedämpft eindringen und dort erheblichen Schaden anrichten. Demnach ist bei einer bevorzugten Weiterbildung der zuvor beschriebenen Stoßsicherung vorgesehen, dass der Freiraum zwischen den nicht angelenkten Endbereichen der Stoßbügel beispielsweise mit einem Stoßbalken oder mit einem zwischen den nicht angelenkten Endbereichen der Stoßbügel eingespannten biegeschlaffen Element, wie beispielsweise einem Seil, einem Gurt oder einer Kette, geeignet überbrückt wird.

Kommt für die Überbrückung des Freiraumes zwischen den nicht angelenkten Endbereichen der Stoßbügel ein vorzugsweise quer zur Fahrzeuglängsachse und horizontal verlaufender Stoßbalken zum Einsatz, ist es von Vorteil, wenn ein erster Endbereich des Stoßbalkens über ein viertes Lager mit dem Stoßbügel der ersten Energieverzehrvorrichtung und gegenüberliegend ein zweiter Endbereich des Stoßbalkens über ein fünftes Lager mit dem Stoßbügel der zweiten Energieverzehrvorrichtung derart verbunden ist, dass eine Stoßkraft, die auftritt, wenn ein Objekt beispielsweise frontal auf den Stoßbalken insbesondere den Mittenbereich des Stoßbalkens stößt, von dem Stoßbalken über die an den jeweiligen Stoßbügeln der Energieverzehrvorrichtungen befestigten Endbereiche auf die beiden Stoßbügel übertragen und somit in den beiden Energieverzehrvorrichtungen der Stoßsicherung eingeleitet wird. Dadurch, dass die Endbereiche des Stoßbalkens jeweils über ein Lager (viertes bzw. fünftes Lager) mit den entsprechenden Stoßbügeln verbunden sind, behindert der Stoßbalken nicht die Schwenkbewegungen der Stoßbügel beim Ansprechen der Stoßsicherung.

Das Vorsehen eines Stoßbalkens zur Überbrückung des Freiraumes zwischen den nicht angelenkten Endbereichen der Stoßbügel bietet den weiteren Vorteil, dass auch bei einem seitlichen Aufprall auf ein Hindernis beide Energieverzehrvorrichtungen der Stoßsicherung ansprechen, infolgedessen die Stoßsicherung auch zur Absorption von höheren Stoßenergien geeignet ist. Der Stoßbalken bewirkt dabei, dass bei einem Verschwenken von einem der beiden Stoßbügel um eine mit dem ihm zugeordneten ersten Lager definierte Schwenkachse der andere Stoßbügel um eine mit dem ihm zugeordneten ersten Lager definierte Schwenkachse mit verschwenkt wird.

Wie bereits angedeutet, ist es aber auch denkbar, dass anstelle eines über Lager mit den Stoßbügeln der Energieverzehrvorrichtungen verbundenen Stoßbalkens beispielsweise ein zwischen den nicht angelenkten Endbereichen der Stoßbügel eingespanntes biegeschlaffes Element, wie beispielsweise ein Seil, ein Gurt oder eine Kette, zum Einsatz kommt. Im Unterschied zu einem relativ biegesteifen Stoßbalken ist es bei der Verwendung von einem biegeschlaffen Element nicht erforderlich, dass dieses über Lager mit den Stoßbügeln der Energieverzehrvorrichtungen verbunden ist. Vielmehr können bei einem biegeschlaffen Element die jeweiligen Endbereiche fest mit den Stoßbügeln verbunden sein, da das zur Überbrückung des Freiraumes zwischen den nicht angelenkten Endbereichen der Stoßbügel verwendete Element biegeschlaff ist und somit die bei einem frontalen Aufprall von den Stoßbügeln gleichzeitig durchgeführten Schwenkbewegungen nicht behindert.

Das Vorsehen eines biegeschlaffen Elements zur Überbrückung des Freiraumes zwischen den nicht angelenkten Endbereichen der Stoßbügel kann insbesondere dann von Vorteil sein, wenn vrerhindert werden soll, dass bei einem seitlichen Aufprall auf ein Hindernis beide Energieverzehrvorrichtungen der Stoßsicherung ansprechen.

Im Folgenden werden bevorzugte Ausführungsformen der erfindungsgemäßen Lösung anhand der beigefügten Zeichnungen beschrieben.

Es zeigen:
- Fig. 1:: eine Draufsicht auf eine Stoßsicherung für den Front- oder Heckbereich eines spurgeführten Fahrzeuges, insbesondere Straßenbahnfahrzeuge, welche eine erste Energieverzehrvorrichtung und eine zweite Energieverzehrvorrichtung jeweils nach einer ersten Ausführungsform der Erfindung aufweist;
- Fig. 2:: die in Fig. 1 gezeigte Stoßsicherung nach Ansprechen von einer der beiden Energieverzehrvorrichtungen;
- Fig. 3:: die in Fig. 1 gezeigte Stoßsicherung nach Ausschöpfen des insgesamt bewirkbaren Energieverzehrs;
- Fig. 4:: eine perspektivische Ansicht eines Bugnasenbereiches eines Fahrzeuges, in welchem eine Stoßsicherung gemäß Fig. 1 vorgesehen ist;
- Fig. 5:: eine Draufsicht auf die Unterseite des in Fig. 4 gezeigten Bugnasenbereiches;
- Fig. 6:: eine Draufsicht von vorne auf den in Fig. 4 gezeigten Bugnasenbereich;
- Fig. 7:: eine Seitenansicht auf den in Fig. 4 gezeigten Bugnasenbereich;
- Fig. 8:: eine Draufsicht auf die Oberseite des in Fig. 4 gezeigten Bugnasenbereiches;
- Fig. 9:: eine Seitenansicht des in Fig. 4 gezeigten Bugnasenbereiches in einer teilgeschnittenen Ansicht;
- Fig. 10:: eine Frontalansicht auf die in dem in Fig. 4 gezeigten Bugnasenbereich aufgenommenen Einzelkomponenten;
- Fig. 11:: eine perspektivische Ansicht der in dem Bugnasenbereich gemäß Fig. 4 aufgenommenen Einzelkomponenten;
- Fig. 12:: eine Seitenansicht der in dem in Fig. 4 gezeigten Bugnasenbereich aufgenommenen Einzelkomponenten;
- Fig. 13:: ein Diagramm zum beispielhaften Erläutern der mit einer Energieverzehrvorrichtung gemäß einer Ausführungsform der Erfindung erzielbaren Kraft-Weg-Charakteristik;
- Fig. 14:: eine Draufsicht auf eine im Front- oder Heckbereich eines spurgeführten Fahrzeuges angeordnete Stoßsicherung im normalen Fahrbetrieb des Fahrzeuges, wobei in der Stoßsicherung zwei Energieverzehrvorrichtungen gemäß einer zweiten Ausführungsform der Erfindung zum Einsatz kommen;
- Fig. 15:: die in Fig. 14 gezeigte Stoßsicherung beim Einleiten einer im leichten Crashfall auftretenden Stoßenergie; und
- Fig. 16:: die in Fig. 14 dargestellte Stoßsicherung beim Einleiten einer im schweren Crashfall auftretenden Stoßenergie bzw. nach Ausschöpfen des insgesamt bewirkbaren Energieverzehrs.

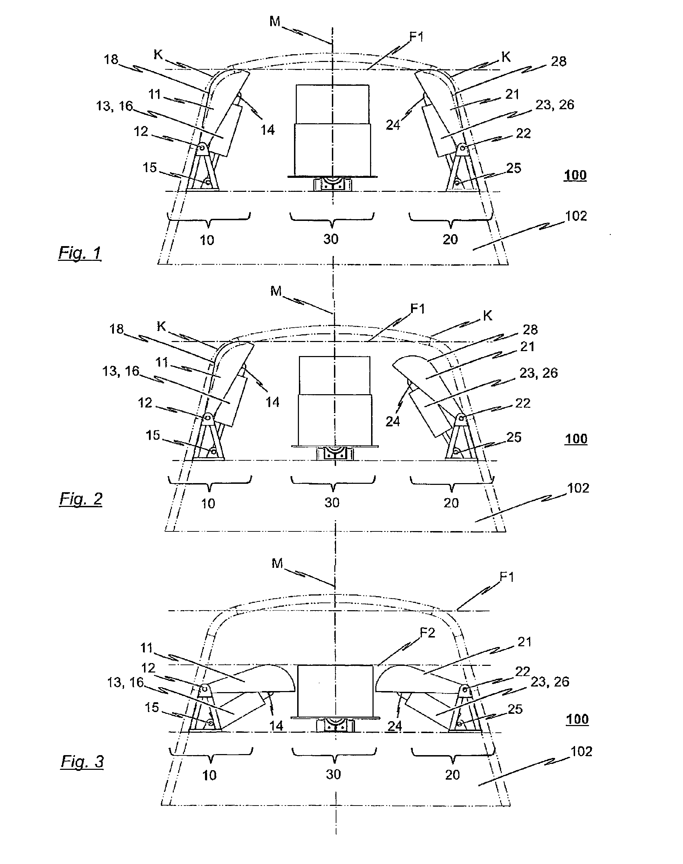

Nachfolgend werden zunächst unter Bezugnahme auf die Darstellungen in Fig. 1 bis Fig. 3 der Aufbau und die Funktionsweise einer in dem Front- oder Heckbereich eines spurgeführten Fahrzeuges vorgesehenen Stoßsicherung 100 beschrieben, welche eine erste und eine zweite Energieverzehrvorrichtung 10, 20 jeweils nach einer ersten Ausführungsform der Erfindung aufweist. Die Stoßsicherung 100 ist, wie dargestellt, in einem Front- oder Heckbereich eines (im Einzelnen nicht explizit dargestellten) spurgeführten Fahrzeuges, insbesondere Straßenbahnfahrzeuges, angeordnet und dient dazu, die bei einem frontalen und/oder seitlichen Aufprall des Fahrzeuges auf ein Hindernis anfallende Stoßenergie zumindest teilweise zu absorbieren bzw. abzubauen.

Die bei der Stoßsicherung 100 gemäß den Darstellungen in Fig. 1 bis Fig. 3 zum Einsatz kommenden Energieverzehrvorrichtungen 10, 20 sind seitlich von der vertikalen Mittenlängsebene M beabstandet an der Stirnseite des spurgeführten Fahrzeuges angeordnet. Im Einzelnen ist bei der dargestellten Ausführungsform eine zur vertikalen Mittenlängsebene M symmetrische Anordnung der beiden Energieverzehrvorrichtungen 10, 20 vorgesehen.

Jede Energieverzehrvorrichtung 10, 20 weist einen Stoßbügel 11, 21 auf, welcher über ein erstes Lager 12, 22 mit dem Fahrzeuguntergestell 102 des spurgeführten Fahrzeuges in horizontaler Ebene um eine durch das erste Lager 12, 22 definierte erste Schwenkachse verschwenkbar angelenkt ist. Zusätzlich zu diesem Stoßbügel 11, 21 umfasst jede Energieverzehrvorrichtung 10, 20 eine Pendelstütze 13, 23, welche mit ihrem Fußbereich über ein drittes Lager 15, 25 mit dem Fahrzeuguntergestell 102 verbunden ist. Der Koptbereicht der Pendelstütze 13, 23 ist über ein zweites Lager 14, 24 mit dem Stoßbügel 11, 21 verbunden, so dass jede Energieverzehrvorrichtung 10, 20 ein statisch bestimmtes Dreibein ausbildet.

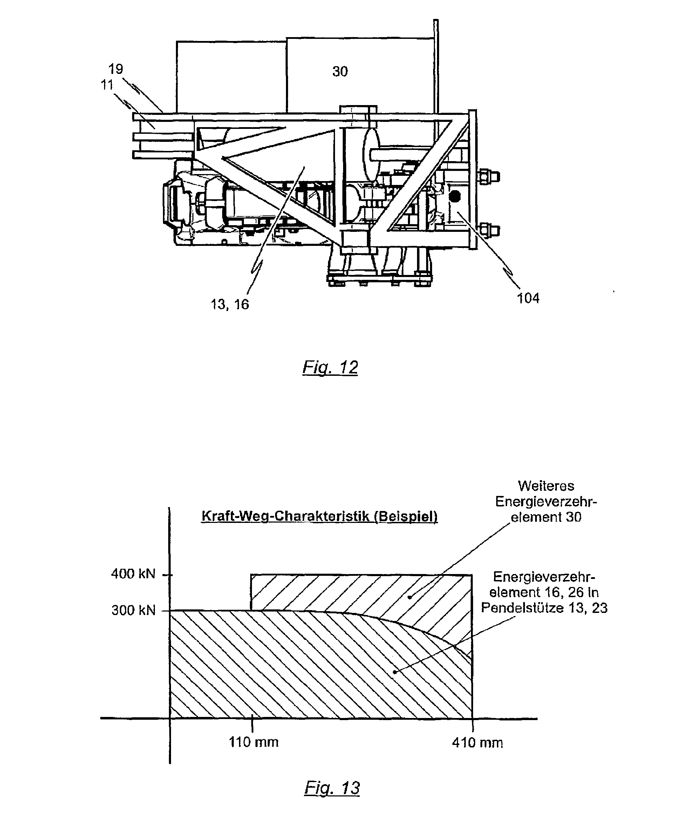

Nachfolgend wir unter Bezugnahme auf die Darstellungen in den Figuren 1 bis 3 die Funktionsweise der Energieverzehrvorrichtung 10, 20 beschrieben. Hierbei wird davon ausgegangen, dass bei der ersten Ausführungsform der Energieverzehrvorrichtungen 10, 20 in den jeweiligen Pendelstützen 13, 23 jeweils ein destruktiv oder regenerativ ausgebildetes Energieverzehrelement 16, 26 integriert ist. Im Einzelnen, und wie es insbesondere auch der Darstellung in Fig. 13 zu entnehmen ist, kann bei der ersten Ausführungsform der Energieverzehrvorrichtung 10, 20 ein in der Pendelstütze 13, 23 integriertes Energieverzehrelement 16, 26 zum Einsatz kommen, welches bis zu einem vorab festlegbaren, als Linearkraft in das Energieverzehreiement 16, 26 eingeleiteten charakteristischen Kraftbetrag (beispielsweise 300 kN) im Wesentlichen starr ist und somit eine Verschwenkung des jeweiligen Stoßbügels 11, 21 um eine mit dem ersten Lager 12, 22 definierte vertikale Schwenkachse verhindert. Weiterhin ist das bei der Energieverzehrvorrichtung 10, 20 gemäß der ersten Ausführungsform zum Einsatz kommende Energieverzehrelement 16, 26 ausgelegt, nach Überschreiten des als Linearkraft in das Energieverzehrelement 16, 26 eingeleiteten charakteristischen Kraftbetrages (von beispielsweise 300 kN) seine Kraft-übertragungsfunktion zu verlieren und unter gleichzeitiger Absorption von Energie eine Verschwenkung des Stoßbügels 11, 21 um eine mit dem ersten Lager 12, 22 definierte vertikale Schwenkachse zuzulassen.

Durch das Verschwenken des Stoßbügels 11, 21 um eine mit dem ersten Lager 12, 22 definierte Schwenkachse nach Überschreiten der für das in der Pendelstütze 13, 23 integrierte Energieverzehrelement 16, 26 charakteristischen Ansprechkraft erfolgt ein Verschwenken des Stoßbügels 11, 21 in Richtung der Stirnseite des spurgeführten Fahrzeuges (val. Fig. 2 - Energieverzehrvorrichtung 20). Im Einzelnen liegt vor dem Ansprechen der in den Pendelstützen 13, 23 integrierten Energieverzehrelemente 16, 26 der Stoßbügel 11, 21 in einem ausgeschwenkten Zustand vor, bei welchem die Kontaktfläche 18, 28 der Stoßbügel 11, 21 mit der Außenkontur K des Front- oder Heckbereiches des spurgeführten Fahrzeuges übereinstimmen (vgl. Fig. 1).

Im Einzelnen ist der Darstellung gemäß Fig. 1 zu entnehmen, dass vor dem Ansprechen eines in der Pendelstütze 13, 23 integrierten Energieverzehrelements 16, 26 der Stoßbügel 11, 21 in einem ausgeschwenkten Zustand vorliegt, bei welchem der äußerste Punkt der dem spurgeführten Fahrzeug abgewandten Seite des Stoßbügels 11, 21 in einer ersten vertikal verlaufenden Ebene F1 liegt.

Nach Ansprechen des in der Pendelstütze 13, 23 integrierten Energieverzehrelements 16, 26 bewegt sich der Stoßbügel 11,21 - aufgrund der Verschwenkung um eine mit dem ersten Lager 12, 22 definierte Schwenkachse - relativ zu der Stirnseite des spurgeführten Fahrzeuges auf die Stirnseite des Fahrzeuges zu.

Nach Ausschöpfung des mit dem in der Pendelstütze 13, 23 integrierten Energieverzehrelements 16, 26 insgesamt bewirkbaren Energieverzehrs (val. Fig. 3) liegt der äußerste Punkt der dem spurgeführten Fahrzeug abgewandten Seite des Stoßbügels 11, 21 in einer zweiten Ebene F2 innerhalb der in den Figuren 1 bis 3 gestrichelt angedeuteten Bugnasenkonturen K des Front- bzw. Heckbereiches des spurgeführten Fahrzeuges.

Die in den Figuren 1 bis 3 dargestellte Stoßsicherung 100 umfasst zusätzlich zu den in der Pendelstütze 13, 23 integrierten Energieverzehrelementen 16, 26 ein weiteres Energieverzehrelement 30, welches mittig an der Stirnseite des spurgeführten Fahrzeuges befestigt ist. Dieses weitere Energieverzehrelement 30 ist ausgelegt, bei Überschreiten eines aufgrund eines axial verlaufenden Stoßes durch das Energieverzehrelement 30 übertragenen, vorab festlegbaren charakteristischen Kraftbetrages anzusprechen und zumindest einen Teil der aufgrund des Stoßes durch das weitere Energieverzehrelement 30 übertragenen Energie zu absorbieren bzw. abzubauen. Wie es der in Fig. 13 gezeigten Kraft-Weg-Charakteristik zu entnehmen ist, liegt die für das Ansprechen des weiteren Energieverzehrelementes 30 charakteristische Ansprechkraft beispielsweise bei 400 kN).

Im Einzelnen kann das weitere Energieverzehrelement 30 als Verformungsrohr ausgeführt und ausgelegt sein, nach Überschreiten des für das Ansprechen des weiteren Energieverzehrelements 30 charakteristischen Kraftbetrages (beispielsweise 400 kN) anzusprechen und durch eine definierte plastische Verformung des Verformungsrohres zumindest einen Teil der aufgrund des Stoßes durch das weitere Energieverzehrelement 30 übertragenen Energie in Verformungsarbeit und Wärme umzuwandeln und somit abzubauen.

In der in Fig. 13 dargestellten Kraft-Weg-Charakteristik für die bei der in den Figuren 1 bis 3 dargestellten Stoßsicherung 100 ist verdeutlicht, dass die für das Ansprechen des in der Pendelstütze 13, 23 integrierten Energieverzehrelements 16, 26 charakteristische Ansprechkraft und die für das Ansprechen des weiteren Energieverzehrelements 30 charakteristische Ansprechkraft unterschiedlich sein können. Des Weiteren ist der Darstellung in Fig. 13 zu entnehmen, dass das weitere Energieverzehrelement 30 den in der Pendelstütze 13, 23 integrierten Energieverzehrelementen 16, 26 nachgeschaltet ist, so dass bei einem Aufprall des spurgeführten Fahrzeuges auf ein Hindernis oder dergleichen zunächst nur die in der Pendelstütze 13, 23 integrierten Energieverzehrelemente 16, 26 ansprechen und das weitere Energieverzehrelement 30 erst nach Verzehr eines festlegbaren Energiebetrages durch die in der Pendelstütze 13, 23 integrierten Energieverzehrelemente 16, 26 anspricht.

Ein nachgeschaltetes Ansprechen des weiteren Energieverzehrelements 30 kann dadurch realisiert werden, dass vor Ansprechen des weiteren Energieverzehrelements 30 die der Stirnseite des spurgeführten Fahrzeuges abgewandte Seite des weiteren Energieverzehrelements 30 in einer Ebene liegt, welche zwischen der ersten Ebene F1 und der zweiten Ebene F2 angeordnet ist.

Demnach spricht das weitere Energieverzehrelement 30 erst dann an, wenn der Stoßbügel 11, 21 der Energieverzehrvorrichtung 10, 20 von der Ausgangsposition gemäß Fig. 1 (erste Ebene F1) bis zu der Ebene verdreht wurde, in welcher die dem spurgeführten Fahrzeug abgewandte Seite des weiteren Energieverzehrelements 30 vor dem Ansprechen des weiteren Energieverzehrelements 30 liegt.

Nach dem Ausschöpfen des mit der Stoßsicherung 100 insgesamt bewirkbaren Energieverzehrs liegt, wie es insbesondere der Darstellung in Fig. 3 entnommen werden kann, die dem spurgeführten Fahrzeug abgewandte Seite des weiteren Energieverzehrelements 30 in der gleichen Ebene F2, wie der Punkt des Stoßbügels 11, 21, welcher von der Stirnseite des spurgeführten Fahrzeuges am weitesten beabstandet ist.

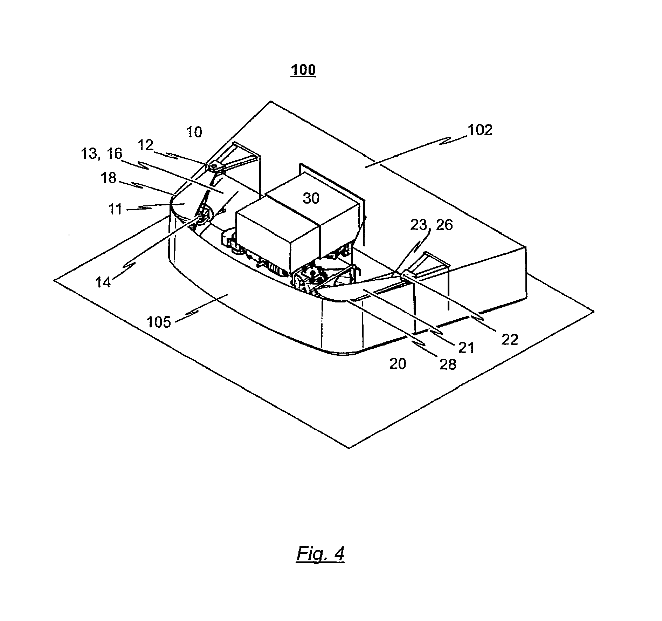

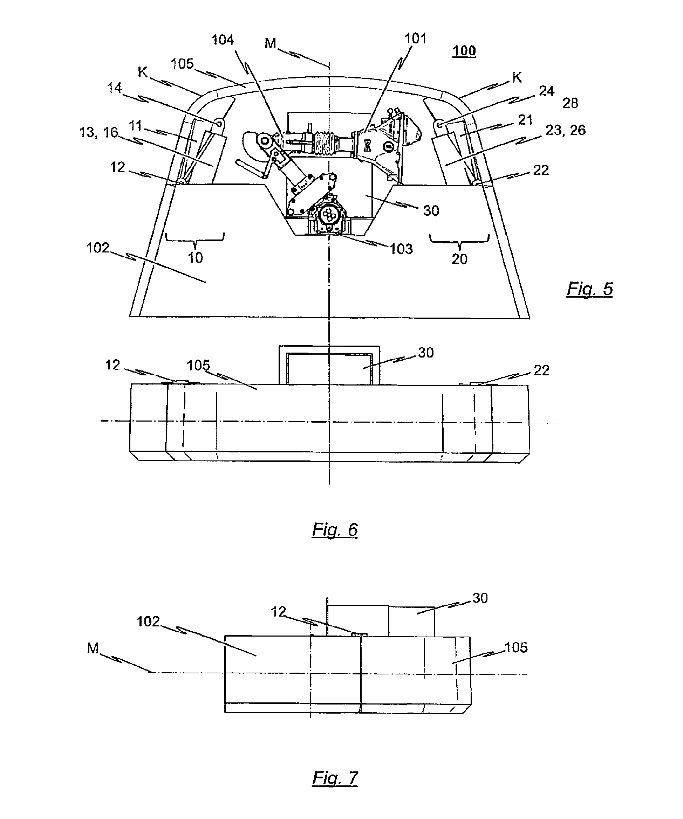

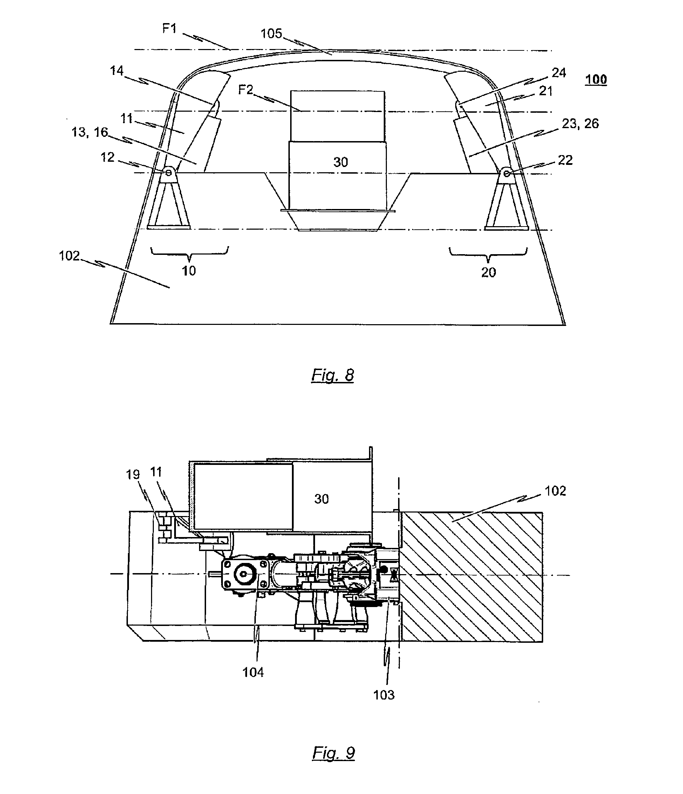

In den Figuren 4 bis 8 sind unterschiedliche Ansichten des Front- bzw. Heckbereiches des spurgeführten Fahrzeuges dargestellt, in welchem eine Stoßsicherung 100 gemäß den Darstellungen der Figuren 1 bis 3 zum Einsatz kommt. Wie dargestellt ist in dem Front- bzw. Heckbereich des spurgeführten Fahrzeuges zusätzlich zu der zuvor beschriebenen Stoßsicherung 100 eine Mittelpufferkupplung 101 vorgesehen, welche einen einklappbaren Kupplungsschaft 104 aufweist und über einen Lagerbock 103 an der Stirnseite des spurgeführten Fahrzeuges angeflanscht ist. Die Mittelpufferkupplung 101, welche in den beiliegenden Zeichnungen im eingeklappten bzw. eingefahrenen Zustand dargestellt ist, befindet sich bei der dargestellten Ausführungsform unterhalb der einzelnen Komponenten der Stoßsicherung 100. Wenn die Mittelpufferkupplung 101 in ihre kuppelbereite Position gebracht werden muss, wird die Stirnseite 105 des Front- bzw. Heckbereiches entsprechend aufgeklappt und die Mittelpufferkupplung 101 ausgefahren.

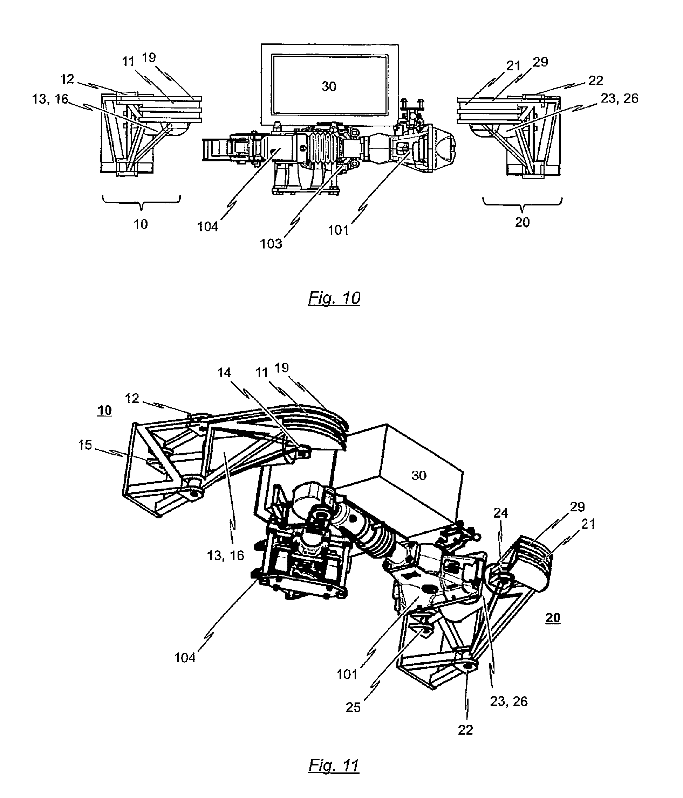

In den Figuren 10 bis 12 sind die im Front- bzw. Heckbereich vorgesehenen Einzelkomponenten noch einmal in unterschiedlichen Ansichten dargestellt. Insbesondere den Darstellungen in den Figuren 10 bis 12 ist zu entnehmen, dass die jeweiligen Kontaktftächen 18, 28 der Stoßbügel 11, 21 zumindest einen Bereich 19, 29 mit einer Profilierung aufweisen können zum Bereitstellen eines Aufkletterschutzes.

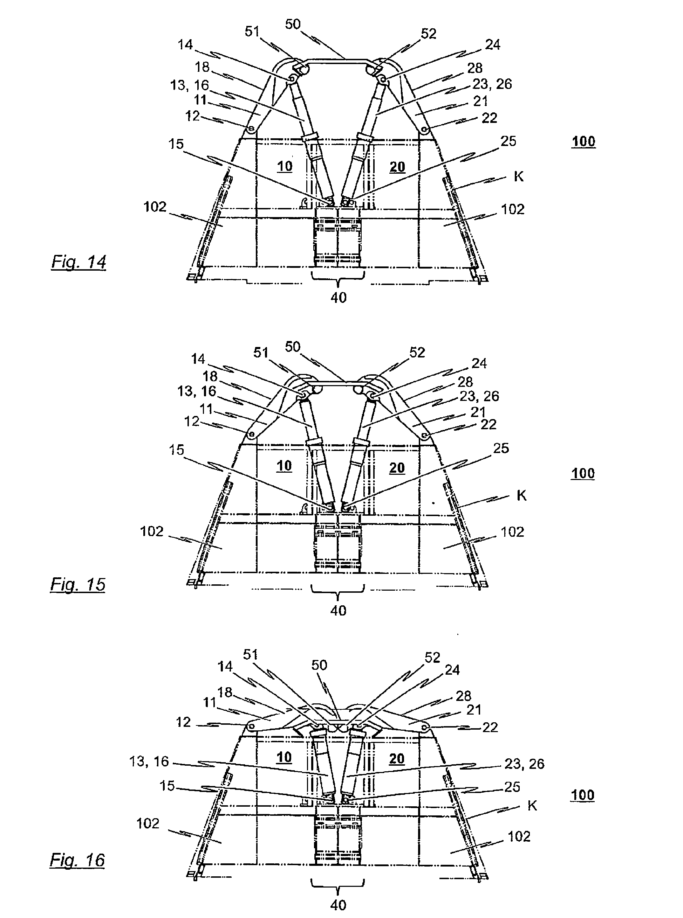

Nachfolgend wird unter Bezugnahme auf die Darstellungen in den Figuren 14 bis 16 eine weitere Ausführungsform einer im Front- oder Heckbereich eines spurgeführten Fahrzeuges angeordneten Stoßsicherung 100 beschrieben, welche zwei Energieverzehrvorrichtung 10, 20 gemäß einer weiteren Ausführungsform der Erfindung aufweist. Im Einzelnen stellt Fig. 14 eine Draufsicht auf eine im Front- oder Heckbereich eines spurgeführten Fahrzeuges angeordnete Stoßsicherung 100 im normalen Fahrbetrieb des Fahrzeuges dar. Fig. 15 zeigt die in Fig. 14 gezeigte Stoßsicherung 100 beim Einleiten einer im leichten Crashfall auftretenden Stoßenergie, während Fig. 16 einen Zustand der Stoßsicherung 100 nach Einleiten einer im schweren Crashfall auftretenden Stoßenergie bzw. nach Ausschöpfen des insgesamt bewirkbaren Energieverzehrs zeigt.

Wie auch die unter Bezugnahme auf die Darstellungen der Figuren 1 bis 3 beschriebene Stoßsicherung 100 weist die in den Figuren 14 bis 16 dargestellte Stoßsicherung 100 insgesamt zwei Energieverzehrvorrichtungen 10, 20 auf, welche symmetrisch zur Fahrzeuglängsachse im Front- oder Heckbereich des Fahrzeuges mit dem Fahrzeuguntergestell 102 derart verbunden sind, dass die Stoßbügel 11, 21 zumindest teilweise der Außenkontur K des Front- oder Heckbereiches entsprechen. Jede Energieverzehrvorrichtung 10, 20 umfasst einen Stoßbügel 11, 21, welcher über ein erstes Lager 12, 22 schwenkbar mit dem Fahrzeuguntergestell 102 verbunden ist. Des weitern ist eine Pendelstütze 13, 23 mit einem ersten und einem zweiten Endbereich (Kopf- bzw. Fußbereich) vorgesehen. Jede Pendelstütze 13, 23 ist mit Ihrem ersten Endbereich über ein zweites Lager 14, 24 mit dem Stoßbügel 11, 21 und mit ihrem zweiten Endbereich über ein drittes Lager 15, 25 mit dem Fahrzeuguntergestell 102 verbunden. Auf diese Weise bilden der Stoßbügel 11, 21 und die Pendelstütze 13, 23 ein Dreibein aus.

Jede Pendelstütze 13, 23 ist 10 ausgebildet, dass diese bis zu einem kritischen Betrag einer in Längsrichtung der Pendelstütze 13, 23 übertragenen Kraft im Wesentlichen starr ist und sich erst bei Überschreiten des kritischen Kraftbetrages verkürzt und somit eine Relativbewegung der Endbereiche der Pendelstütze 13, 23 aufeinander zu ermöglicht. Dieser kritische Kraftbetrag ist vorab festlegbar bzw. festgelegt.

Im Einzelnen kommt bei der in den Figuren 14 bis 17 dargestellten Ausführungsform ein teleskopartiger Aufbau der Pendelstützen 13, 23 zum Einsatz, mit einem Stützgehäuse, ein darin aufgenommenes Kraftübertragungsglied sowie ein in dem Stützgehäuse aufgenommenes Energieverzehrelement 16, 26. Dadurch, dass jeder Stoßbügel 11, 21 an seinem ersten Ende über das erste Lager 12, 22 schwenkbar mit dem Fahrzeuguntergestell 102 und an seinem zweiten Ende über ein zweites Lager 14, 24 schwenkbar mit der Pendelstütze 13, 23 verbunden ist, wird eine auf den Stoßbügel 11, 21 einwirkende Stoßkraft zunächst in die Pendelstütze 13, 23 eingeleitet. Überschreitet die in die Pendelstütze 13, 23 eingeleitete Stoßkraft den für das Ansprechen des in der Pendelstütze 13, 23 integrierten Energieverzehrelements 16, 26 und somit den für das Verkürzen der Pendelstütze 13, 23 charakteristischen Kraftbetrag, findet unter gleichzeitiger Verkürzung der Pendelstütze 13, 23 eine Verschwenkung des Stoßbügels 11, 21 um eine mit dem ersten Lager 12, 22 definierte Schwenkachse statt. Da bei diesem Bewegungsablauf stets die in die Pendelstütze 13, 23 eingeleitete Stoßkraft in Längsrichtung der Pendelstütze 13, 23 verläuft, wird sichergestellt, dass die Stoßkraft axial in das in der Pendelstütze 13, 23 integrierte Verzehrelement 16, 26 eingeleitet wird.

In Fig. 14 ist ein Zustand gezeigt, bei welchem das in der Pendelstütze 13, 23 integrierte Energieverzehrelement 16, 26 noch nicht angesprochen hat. In diesem Zustand entsprechen die Kontaktflächen 18, 28 der Stoßbügel 11, 21 zumindest teilweise der Außenkontur K des Front- oder Heckbereiches des spurgeführten Fahrzeuges.

In Fig. 15 ist ein Zustand nach Ansprechen der in der Pendelstütze 13, 23 integrierten Energieverzehrelemente 16, 26 gezeigt. Wie dargestellt, hat bereits eine Verkürzung der Pendelstützen 13, 23 und somit eine gewisse Schwenkbewegung der Stoßbügel 11, 21 um eine mit dem ersten Lager 12, 22 definierte vertikale Schwenkachse stattgefunden. Nach Ausschöpfung des maximalen Rückhubes der Pendelstütze 13, 23 (vgl. Fig. 16) ist der mit den in der Pendelstütze 13, 23 integrierten Energieverzehrelementen 16, 26 maximal erzielbare Energieverzehr ausgeschöpft. Um bei dem in Fig. 16 dargestellten Zustand zu vermeiden, dass die über die charakteristische Betriebslast der Pendelstützen 13, 23 hinausgehenden Stoßkräfte über das dritte Lager 15, 25 ungedämpft in das Fahrzeuguntergestell 102 weitergeleitet werden, ist ein weiteres Energieverzehrelement 40 zwischen dem dritten Lager 15, 25 und dem Fahrzeuguntergestell 102 vorgesehen. Bei dem in Fig. 16 dargestellten Zustand wird die von den Stoßbügeln 11, 21 auf die Pendelstütze 13, 23 übertragene Kraft durch das dritte Lager 15, 25 als Linearkraft in das weitere Energieverzehrelement 40 eingeleitet.

Bei der in den Figuren 14 bis 16 dargestellten Ausführungsform der Stoßsicherung 100 kommt ferner ein Stoßbalken 50 zum Einsatz, welcher über ein viertes Lager 51 mit dem Stoßbügel 11 der ersten Energieverzehrvorrichtung 10 und über ein fünftes Lager 52 mit dem Stoßbügel 21 der zweiten Energieverzehrvorrichtung 20 derart verbunden ist, dass bei dem Verschwenken von einem der beiden Stoßbügel 11, 22 um eine mit dem ihm zugeordneten ersten Lager 12, 22 definierte Schwenkachse gleichzeitig der andere Stoßbügel 21, 11 um eine mit dem ihm zugeordneten ersten Lager 22, 12 definierte Schwenkachse mitverschwenkt wird.

Kurz zusammengefasst wird erfindungsgemäß eine Stoßsicherung 100 vorgeschlagen, die eine erste Energieverzehrvorrichtung 10 und eine zweite Energieverzehrvorrichtung 20 aufweist, welche vorzugsweise symmetrisch zur Fahrzeuglängsachse M im Front- oder Heckbereich des Fahrzeuges mit dem Fahrzeuguntergestell 102 verbunden sind. Jede der beiden Energieverzehrvorrichtungen 10, 20 weist einen seitlich am Fahrzeuguntergestell 102 angelenkten um eine vertikale Achse schwenkbaren Stoßbügel 11, 21 auf, der zum Fahrzeuguntergestell 102 über jeweils eine Pendelstütze 13, 23 abgestützt ist. Die Kombination aus Stoßbügel 11, 21 und Pendelstütze 13, 23 bildet ein statisch bestimmtes Dreibein aus. Im Crashfall verkürzen sich die Pendelstützen 13, 23 der Energieverzehrvorrichtungen 10, 20 unter definiertem Kraftaufwand und es findet ein Verschwenken der Stoßbügel 11, 21 zur Stirnseite des spurgeführten Fahrzeuges hin statt. Der für diese Schwenkbewegung erforderliche Energieumsatz wird der kinetischen Energie des Aufpralls entzogen. Durch die spezielle Anordnung der beiden Energieverzehrvorrichtungen 10, 20 ist jeder Stoßbügel 11, 21 in der Lage, signifikante Vertikalkräfte zu übernehmen und kann daher auch als Aufkletterschutz verwendet werden.

Wie es der in den Figuren 14 bis 16 dargestellten Ausführungsform entnommen werden kann, kann der konstruktionsbedingte Freiraum zwischen den beiden Stoßbügeln 11, 21 der Energieverzehrvorrichtungen 10, 20 durch den bereits erwähnten Stoßbalken 50 geschlossen werden, der so angeordnet ist, dass er die Schwenkbewegung der Stoßbügel 11, 21 nicht behindert, jedoch Anprallkräfte, die in diesem Raum auftreten, an die beiden Stoßbügel 11, 21 weiterleitet und so die Energieverzehrelemente 16, 26 der Energieverzehrvorrichtung 10, 20 ausnutzen kann.

Vorzugsweise ist in jeder der beiden Pendelstützen 13, 23 der Stoßsicherung 100 eine Einrichtung zur Energieaufnahme (Energieverzehrelement 16, 26) vorgesehen, wobei je nach gewünschtem Anwendungsfall verschiedene reversible und irreversible Systeme sowie Kombinationen davon verwendet werden können. Die Unterbringung eines Energieverzehrelements 16, 26 in einer Pendelstütze 13, 23 bietet den Vorteil, dass ausschließlich Längskräfte und keinerlei Biegemomente übertragen werden müssen. Es können daher alle aus der Konstruktion von Mittelpufferkupplungen bekannte Systeme verwendet werden. Insbesondere kann es zur Erfüllung der Forderung nach EN 15227 sinnvoll sein, die Reaktionskraft der Energieverzehreinrichtungen über den zur Verfügung stehenden Hub kontinuierlich oder stufenförmig zu verändern.

Der Ereignisablauf beim Energieverzehr ist zur optimalen Auslegung der Stoßsicherung 100 essenziell. Durch die räumliche Anordnung der Stoßbügel 11, 21 und der Pendelstütze 13, 23 und die Veränderung der Geometrie beim Einpuffern ist die äußere Charakteristik bezüglich des Stoßbügels 11, 21 eine andere als die innere Charakteristik des Energieverzehrsystems in der Pendelstütze 13, 23. Bei schräger Krafteinleitung, d. h. bei einem schrägen Aufprall, bei welchem meist nur die aufprallseitige Energieverzehrvorrichtung 10, 20 aktiviert wird, ändert sich die äußere Charakteristik ebenfalls. Mit der erfindungsgemäßen Lösung lässt sich jedoch das statisch bestimmte System analytisch gut beschreiben und berechnen.

Um die Krafteinleitung so zu gestalten, dass die Berechnungen zutreffend sind, ist die Vorderseite der jeweiligen Stoßbügel 11, 21 vorzugsweise als Kreisbogen ausgeführt, dessen Mittelpunkt auf einer mit dem zweiten Lager 14, 24 definierten Schwenkachse liegt. Dadurch kann sichergestellt werden, dass eine äußere Last radial auf diesen Anlenkpunkt wirkt und kein unkalkuliertes Biegemoment im Stoßbügel 11, 21 erzeugt werden kann. Die runde Außenkontur der Stoßbügel 11, 21 sorgt bei einem Aufprall zweier gleicher Fahrzeuge dafür, dass die Stoßbügel 11, 21 beim Einpuffern aufeinander abrollen und so die Auslegungskräfte kaum durch zusätzliche Reibung verfälscht werden.

Wie bereits angedeutet, gestattet die erfindungsgemäße Anordnung der Energieverzehrvorrichtung 10, 20, dass der Stoßbügel 11, 21 in der Lage ist, signifikante Vertikalkräfte zu übernehmen, so dass dieser auch als Autkletterschutz verwendet werden kann. Hierzu ist es im Einzelnen bevorzugt, wenn die Kontaktflächen 18, 28 der Stoßbügel 11, 21 jeweils mit einer geeigneten Profilierung 19, 29 als Aufkletterschutz versehen sind. Diese Profilierung 19, 29 beeinträchtigt keinesfalls die zuvor beschriebene Eigenschaft der runden Außenkontur der Stoßbügel 11, 21.

Grundsätzlich ist denkbar, dass zwischen den Stoßbügeln 11, 21 ein Stoßbalken 50 angeordnet werden kann, der verhindert, dass schmale, harte Objekte zwischen den Stoßbügeln 11, 21 hindurch in das Fahrzeug eindringen können. Der Stoßbalken 50 wird in beiden Stoßbügeln 11, 21 so vorzugsweise mit Hilfe von Lagern 51, 52 gelagert, dass er in der Ausgangsstellung spielfrei eingespannt ist. Beim Einpuffern eines oder beider Stoßbügel 11, 21 gleitet der Stoßbalken 50 dann in entsprechende Aussparungen innerhalb der Stoßbügel 11, 21. Dabei spielt es keine Rolle, ob die zum Einpuffern führende Kraft auf die Stoßbügel 11, 21 oder den Stoßbalken 50 wirkt.

Die Pendelstütze 13, 23 funktioniert prinzipiell genauso wie eine konventionelle Kupplungsstange. Dementsprechend können Energieverzehrelemente bekannter Bauart verwendet werden: als reversible Elemente kommen Stahl- oder Gummifedern genauso in Frage wie hydraulische oder hydrostatische Puffer. Irreversible Energieverzehrelemente sind vorzugsweise Verformungsrohre, aber auch der Einsatz von verformbarem Material, wie Metallschaum oder Honeycombs ist genauso denkbar wie Faltrohre, Rollrohre oder zerspannende oder zerreißende Lösungen. Da eine zwei oder mehrstufige Charakteristik vorteilhaft sein kann, um verschiedene Crashfallszenarien abzudecken, ist eine Kombination aus einem Puffer und einem Verformungsrohr oder zwei Verformungsrohren am wahrscheinlichsten.

Demnach betrifft die Erfindung eine an der Fahrzeugstruktur angebaute oder anbaubare Stoßsicherung 100 für spurgeführte Fahrzeuge, die es erlaubt, dass im Falle eines Aufpralls durch ein kontrolliertes, reversibles, oder irreversibles, mit definierter Kraft erfolgendes Zurückweichen von Kontaktflächen 18, 28 kinetische Energie abgebaut wird. Mit der Erfindung ist über geeignete Einstellung der Charakteristik der zum Einsatz kommenden Energieverzehrelemente 16, 26, 30, 40 einer Anpassung an die Fahrzeugspezifikation möglich. Insbesondere arbeitet die Stoßsicherung 100 auch bei unterschiedlichen Auftreffwinkeln, d. h. bei schrägen Stößen.

Bei der erfindungsgemäßen Energieverzehrvorrichtung 10, 20 handelt es sich um ein statisch bestimmtes System, welches analytisch berechenbar und gegen Vertikalkräfte robust ist. Von daher kann das System auch als Aufkletterschutz verwendet werden.

Die Erfindung ist nicht auf die zuvor beschriebenen Ausführungsformen beschränkt. Insbesondere ist es denkbar, dass bei der Stoßsicherung 100 mehr oder weniger als zwei Stoßbügel 50 verwendet werden. Auch müssen die mit den Lagern 11, 14, 15, 21, 24, 25 definierten Schwenkachsen nicht in notwendiger Weise senkrecht verlaufen. Ferner ist es nicht zwingend erforderlich, dass die Stoßbügel 11, 21 an der Fahrzeugstruktur K außen angelenkt sind. Werden die Stoßbügel 11, 21 allerdings innerhalb der Fahrzeugstruktur K angelenkt, kann die Funktionalität der Stoßsicherung 100 bei einem schrägen Aufprall beeinträchtigt sein.

Gleichermaßen müssen die Kontaktflächen 18, 28 nicht notwendigerweise kreisförmig sein. Allerdings ist die zuvor beschriebene kreisförmige Ausführung im Hinblick auf eine Abrollbewegung und eine definierte Krafteinleitung von Vorteil.

In der vorliegenden Beschreibung wurde davon ausgegangen, dass die Kontaktflächen 18, 28 integraler Bestandteil der Stoßbügel 11, 21 sind. Denkbar ist es aber auch, dass die Kontaktflächen 18, 28 nach Art eines Viergelenks über zwei Ablenkungen (mit Momententstütze wie bei einer Doppelquerlenkerachse samt Lenkung bzw. einer Raumlenkerachse) am Untergestell 102 angebunden sind. Der verbleibende Freiheitsgrad wird dann von einer Pendelstütze 13, 23 wie beschrieben abgefangen. Die Kontaktfläche 18, 28 bewegt sich dann wie eine Seite eines Parallelogramms. Treffen zwei gleiche Fahrzeuge aufeinander, findet keine Relativbewegung zwischen den Kontaktflächen 18, 28 statt.

Um den freien Raum zwischen den beiden Stoßbügeln 11, 21 zu überbrücken, ist es - wie zuvor beschrieben - möglich, einen Stoßbalken 50 einzusetzen. Der freie Raum zwischen den Stoßbügeln 11, 21 kann aber auch dadurch geschlossen werden, dass die Stoßbügel 11, 21 beider Seiten asymmetrisch ausgeführt sind, so dass sie sich in bzw. übereinander kämmend überlappen können.

In gleicher Weise ist es möglich, dass der Stoßbalken 50 auch durch zwei kürzere Stoßbalken ersetzt werden kann, die über insgesamt drei Gelenke untereinander und jeweils einem Stoßbügel 11, 21 verbunden sind. Ein schmales Objekt zöge dann die Stoßbügel nach innen, so dass der Energieverzehr weitgehend genutzt würde.

Bei der unter Bezugnahme auf die Darstellungen in den Figuren 14 bis 16 dargestellten Ausführungsform kommt eine serielle Anordnung der Kraftstufen zum Einsatz. Im Unterschied hierzu ist es - wie zuvor beispielsweise auf die Darstellungen gemäß den Figuren 1 bis 3 beschrieben - eine parallele Anordnung denkbar, bei welcher die zweite bzw. weitere Kraftstufe erst anspricht, nachdem die erste Kraftstufe einen gewissen Hub zurückgelegt hat. Wie bereits ausgeführt, ist die weitere Kraftstufe separat am Untergestell 102 des Fahrzeuges befestigt und wird entweder durch sich bewegende Teile des Stoßbügelsystems oder komplett getrennt durch das Aufprallobjekt aktiviert. Die Stoßbügel arbeiten parallel dazu weiter, so dass sich die Reaktionskräfte aller parallelwirkenden Systeme addieren.

Grundsätzlich ist die Erfindung nicht auf Ausführungsformen beschränkt, bei welcher in der Pendelstütze 13, 23 Energieverzehrelemente 16, 26 integriert bzw. enthalten sind. Denkbar ist es, dass die Pendelstütze 13, 23 ohne Energieverzehrelemente ausgeführt sind, wobei die Stoßbügel 11, 21 dann starr sein würden und als definierte Krafteinleitungsstellen bzw. Anbindungspunkte für andere Stoßsicherungen und/oder Aufkletterschutz dienen. Auch wäre es möglich, dass die Pendelstützen 13, 23 ohne Energieverzehrelement ausgerüstet sind, jedoch mit ihren Fußpunkten an einer energieaufnehmenden Struktur (Energieverzehrelement 40) angelenkt sind. Die Pendelstützen 13, 23 würden dann zur Weiterleitung der Kraft dienen, während die eigentlichen Energieverzehrelemente 40 an einer anderen Stelle angeordnet sind. Insbesondere ist es dabei denkbar, dass die Pendelstütze 13, 23 mit ihren Fußpunkten an einer gemeinsamen energieverzehrenden Struktur (Energieverzehrelement 40) angelenkt sind, so dass sich beide Stoßbügel 11, 21 zwangsläufig gemeinsam bewegen, selbst wenn nur einer mit der Aufprallkraft beaufschlagt wird.

## Patentansprüche

1. Energieverzehrvorrichtung (10, 20) für eine stoßsicherung (100) für ein spurgeführtes Fahrzeug, insbesondere Straßenbahnfahrzeug, welche ausgelegt ist, die bei einem Aufprall des Fahrzeuges auf ein Hindernis anfallende Stoßenergie zumindest teilweise zu absorbieren bzw. abzubauen, **dadurch gekennzeichnet, dass** die Energieverzehrvorrichtung (10, 20) folgendes aufweist:
- einen Stoßbügel (11, 21), welcher über ein erstes Lager (12, 22) schwenkbar mit dem Fahrzeuguntergestell (102) verbindbar ist;
- eine Pendelstütze (13, 23) mit einem ersten und einem zweiten Endabschnitt, welche derart mit dem ersten Endabschnitt über ein zweites Lager (14, 24) mit dem Stoßbügel (11, 21) verbunden und mit dem zweiten Endabschnitt über ein drittes Lager (15, 25) mit dem Fahrzeuguntergestell (102) verhindhar ist, dass der Stoßbügel (11, 21) und die Pendelstütze (13, 23) ein Dreibein bilden; und
- eine Energieverzehreinrichtung (16, 26, 30, 40), welche derart ausgebildet und angeordnet ist, dass bei einem Verschwenken des Stoßbügets (11, 21) um eine mit dem ersten Lager (12, 22) definierte Schwenkachse das daraus resultierende Kraftmoment als Linearkraft in die Energieverzehreinrichtung (16, 26, 30, 40) eingeleitet und dort zumindest teilweise absorbiert bzw. abgebaut wird.

2. Energieverzehrvorrichtung (10, 20) nach Anspruch 1,
wobei die Energieverzehreinrichtung (16, 26, 30, 40) mindestens ein erstes Energieverzehrelement (16, 26) aufweist, welches derart in der Pendelstütze (13, 23) integriert ist, dass bei einem Verschwenken des Stoßbügels (11, 21) um eine mit dem ersten Lager (12, 22) definierte Schwenkachse das daraus resultierende Kraftmoment als Linearkraft in das mindestens eine Energieverzehrelement (16, 26) eingeleitet wird.

3. Energieverzehrvorrichtung (10, 20) nach Anspruch 2,
wobei das mindestens eine erste Energieverzehrelement (16, 26) ausgebildet ist, bei einer Krafteinleitung in das erste Energieverzehrelement (16, 26) bis zu einer betragsmäßig vorab festlegbaren charakteristischen Kraft im Wesentlichen starr zu sein und somit eine Schwenkbewegung des Stoßbügels (11, 21) um eine mit dem ersten Lager (12, 22) definierte Schwenkachse zu verhindern, und
wobei das mindestens eine erste Energieverzehrelement (16, 26) ferner derart ausgebildet und in der Pendelstütze (13, 23) integriert ist, dass nach Überschreiten des charakteristischen Kraftbetrages eine Längenverkürzung der Pendelstütze (13, 23) auftritt und das mindestens eine erste Energieverzehrelement (16, 26) ggf. unter gleichzeitiger Absorption von Energie eine Schwenkbewegung des Stoßbügels (11, 21) um die Schwenkachse zulässt.

4. Energieverzehrvorrichtung (10, 20) nach Anspruch 2 oder 3,
wobei das mindestens eine erste Energieverzehrelement (16, 26) als destruktiv ausgebildetes Verformungselement mit einem vorab festlegbaren Ansprechverhalten ausgeführt ist.

5. Energieverzehrvorrichtung (10, 20) nach Anspruch 2 oder 3,
wobei das mindestens eine erste Energieverzehrelement (16, 26) regenerativ mit einem vorab festlegbaren Ansprechverhalten ausgebildet ist.

6. Energieverzehrvorrichtung (10, 20) nach einem der vorhergehenden Ansprüche, wobei die Energieverzehreinrichtung (16, 26, 30, 40) mindestens ein mit dem Fahrzeuguntergestell (102) verbindbares zweites Energieverzehrelement (30, 40) aufweist, mit welchem der zweite Endabschnitt der Pendelstütze (13, 23) über das dritte Lager (15, 25) derart verbunden ist, dass bei einem Verschwenken des Stoßbügels (11, 21) um eine mit dem ersten Lager (12, 22) definierte Schwenkachse das daraus resultierende Kraftmoment zumindest teilweise als Linearkraft über die Pendelstütze (13, 23) in das mindestens eine zweite Energiewerzehrelement (30, 40) eingeleitet wird.

7. Energieverzehrvorrichtung (10, 20) nach einem der vorhergehenden Ansprüche, wobei die Energieverzehreinrichtung (16, 26, 30, 40) mindestens ein drittes Energieverzehrelement aufweist, welches über ein Kraftübertragungselement mit dem dritten Lager (15, 25) verbunden ist.

8. Energieverzehrvorrichtung (10, 20) nach einem der vorhergehenden Ansprüche, welche ferner eine mit dem Stoßbügel (11, 21) verbundene Kontaktfläche (18, 28) aufweist zum Einleiten von Stoßkräften in den Stoßbügel (11, 21), wobei die Kontaktfläche (18, 28) zumindest einen Bereich mit einer konvex ausgebildeten Außenkontur aufweist.

9. Energieverzehrvorrichtung (10, 20) nach Anspruch 8,
wobei der mindestens eine Bereich der Kontaktfläche (18, 28) als Kreisbogen ausgeführt ist, dessen Mittelpunkt auf einer mit dem zweiten Lager (14, 24) definierten Schwenkachse liegt.

10. Energieverzehrvorrichtung (10, 20) nach Anspruch 8 oder 9,
wobei die Kontaktfläche (18, 28) zumindest einen Bereich (19, 29) mit einer Profilierung aufweist zum Bereitstellen eines Autkletterschutzes.

11. Stoßsicherung (100) für den Front- oder Heckbereich eines spurgeführten Fahrzeuges, insbesondere Straßenbahnfahrzeuge, welche eine erste und eine zweite Energieverzehrvorrichtung (10, 20) jeweils nach einem der vorhergehenden Ansprüche aufweist, wobei die Energieverzehrvorrichtungen (10, 20) vorzugsweise symmetrisch zur Fahrzeugslängsachse (L) im Front- oder Heckbereich des Fahrzeuges mit dem Fahrzeuguntergestell (102) derart verbindbar sind, dass die Stoßbügei (11, 21) zumindest teilweise der Außenkontur (K) des Front- oder Heckbereiches entsprechen.

12. Stoßsicherung (100) nach Anspruch 11,
wobei die Stoßbügel (11, 21) derart ausgelegt sind, dass zwischen den dem zugehörigen ersten Lager (12, 22) gegenüberliegenden Endbereichen der Stoßbügel (11, 21) ein Freiraum vorliegt, und wobei ferner eine Einrichtung (50, 51, 52) vorgesehen ist, welche mit den beiden Stoßbügeln (11, 21) verbunden ist und den Freiraum zwischen den nicht angelenkten Endbereichen der Stoßbügel (11, 21) überbrückt.

13. Stoßsicherung (100) nach Anspruch 12,
wobei die Einrichtung (50, 51, 52) einen Stoßbalken (50) aufweist, der über ein viertes Lager (51) mit dem Stoßbügel (11) der ersten Energieverzehrvorrichtung (10) und über ein fünftes Lager (52) mit dem Stoßbügel (21) der zweiten Energieverzehrvorrichtung (20) derart verbunden ist, dass eine Stoßkraft, die auftritt, wenn ein Objekt frontal auf den Stoßbalken (50) stößt, von dem Stoßbalken (50) über die an den jeweiligen Stoßbügeln (11, 21) befestigten Endbereiche auf die beiden Stoßbügel (11, 21) übertragen und somit in den beiden Energieverzehrvorrichtungen (10, 20) eingeleitet wird.

14. Stoßsicherung (100) nach Anspruch 12,
wobei die Einrichtung (50, 51, 52) ein zwischen den nicht angelenkten Endbereichen der Stoßbügel (11, 21) vorgesehenes biegeschlaffes Element, insbesondere ein Seil, ein Gurt oder eine Kette, aufweist, welches zum Überbrücken des Freiraumes zwischen den nicht angelenkten Endbereichen der Stoßbügel (11, 21) sowohl mit dem ersten Stoßbügel (11) als auch mit dem zweiten Stoßbügel (21) fest verbunden ist.

15. Stoßsicherung (100) nach einem der Ansprüche 11 bis 14,
wobei die zweiten Endabschnitte der Pendelstützen (13, 23) der beiden Energieverzehrvorrichtungen (10, 20) mit einem gemeinsamen Energieverzehrelement (40) verbunden sind.

## Claims

1. An energy-absorbing device (10, 20) for a shock absorber (100) for a track-guided vehicle, particularly a tramway vehicle, which is designed to absorb or dissipate at least a portion of the impact energy resulting from a collision of the vehicle with an obstacle, **characterized in that** the energy-absorbing device (10, 20) comprises the following:
- a bumper bar (11, 21) which is pivotably connectable to the vehicle underframe (102) via a first bearing (12, 22);
- a pendulum support (13, 23) having a first and a second end section which is connected at the first end section to the bumper bar (11, 21) via a second bearing (14, 24) and connectable at the second end section with the vehicle underframe (102) via a third bearing (15, 25) such that the bumper bar (11, 21) and the pendulum support (13, 23) form a tripod; and
- an energy-absorbing mechanism (16, 26, 30, 40) which is designed and disposed such that upon the pivoting of the bumper bar (11, 21) about the pivot axis defined by the first bearing (12, 22), the resulting moment of force is introduced into the energy-absorbing mechanism (16, 26, 30, 40) as linear force and at least partly absorbed or dissipated there.

2. The energy-absorbing device (10, 20) according to claim 1,
wherein the energy-absorbing mechanism (16, 26, 30, 40) comprises at least one first energy-absorbing element (16, 26) which is integrated into the pendulum support (13, 23) such that upon the pivoting of the bumper bar (11, 21) about a pivot axis defined by the first bearing (12, 22), the resulting moment of force is introduced into the at least one energy-absorbing element (16, 26) as linear force.

3. The energy-absorbing device (10, 20) according to claim 2,
wherein the at least one first energy-absorbing element (16, 26) is designed to be substantially rigid when a force of up to a predefinable characteristic amount is introduced into said first energy-absorbing element (16, 26) and thus prevent a pivoting movement of the bumper bar (11, 21) about a pivot axis defined by the first bearing (12, 22), and wherein the at least one first energy-absorbing element (16, 26) is further designed and integrated into the pendulum support (13, 23) such that a longitudinal contracting of the pendulum support (13, 23) occurs upon the characteristic amount of force being exceeded and that the at least one first energy-absorbing element (16, 26) permits a pivoting movement of the bumper bar (11, 21) about the pivot axis simultaneous to the absorbing of energy as applicable.

4. The energy-absorbing device (10, 20) according to claim 2 or 3,
wherein the at least one first energy-absorbing element (16, 26) is designed as a destructively-configured deformation element having a predefinable response characteristic.

5. The energy-absorbing device (10, 20) according to claim 2 or 3,
wherein the at least one first energy-absorbing element (16, 26) is designed to be regenerative with a predefinable response characteristic.

6. The energy-absorbing device (10, 20) according to any one of the preceding claims, wherein the energy-absorbing mechanism (16, 26, 30, 40) comprises at least one second energy-absorbing element (30, 40) connectable to the vehicle underframe (102) with which the second end section of the pendulum support (13, 23) is connected via the third bearing (15, 25) such that upon a pivoting of the bumper bar (11, 21) about a pivot axis defined by the first bearing (12, 22), the resulting moment of force is at least partly introduced into the at least one second energy-absorbing element (30, 40) via the pendulum support (13, 23) as linear force.

7. The energy-absorbing device (10, 20) according to any one of the preceding claims, wherein the energy-absorbing mechanism (16, 26, 30, 40) comprises at least one third energy-absorbing element which is connected to the third bearing (15, 25) via a force-transferring element.

8. The energy-absorbing device (10, 20) according to any one of the preceding claims which further comprises a contact surface (18, 28) connected to the bumper bar (11, 21) to introduce impact forces into said bumper bar (11, 21), wherein said contact surface (18, 28) comprises at least one area configured with a convex outer contour.

9. The energy-absorbing device (10, 20) according to claim 8,
wherein the at least one area of the contact surface (18, 28) is configured as an arc, its center situated on a pivot axis defined by the second bearing (14, 24).

10. The energy-absorbing device (10, 20) according to claim 8 or 9,
wherein the contact surface (18, 28) comprises at least one area (19, 29) having a profile for the provision of an override guard.

11. A shock absorber (100) for the front or rear region of a track-guided vehicle, particularly tramway vehicles, comprising a first and a second energy-absorbing device (10, 20), in each case in accordance with one of the preceding claims, wherein the energy-absorbing devices (10, 20) are connected to the vehicle underframe (102) at the front or rear region of the vehicle preferably symmetrical to the vehicle longitudinal axis (L) such that the bumper bar (11, 21) at least partly corresponds to the outer contour (K) of the front or rear region.

12. The shock absorber (100) according to claim 11,
wherein the bumper bar (11, 21) is designed such that there is a clearance between the end regions of the bumper bar (11, 21) associated with the first bearing (12, 22), and wherein a mechanism (50, 51, 52) is further provided which is connected to the two bumper bars (11, 21) and bridges the clearance between the non-articulated end regions of the bumper bars (11, 21).

13. The shock absorber (100) according to claim 12,
wherein the mechanism (50, 51, 52) comprises a buffer beam (50) connected to the bumper bar (11) of the first energy-absorbing device (10) via a fourth bearing (51) and to the bumper bar (21) of the second energy-absorbing device (20) via a fifth bearing (52) such that an impact force which occurs when an object collides frontally with the buffer beam (50) is transmitted from the buffer beam (50) to the two bumper bars (11, 21) through the end regions affixed to the respective bumper bars (11, 21) and thus introduced into the two energy-absorbing devices (10, 20).

14. The shock absorber (100) according to claim 12,
wherein the mechanism (50, 51, 52) comprises a flexible element provided between the non-articulated end regions of the bumper bar (11, 21), in particular a cable, a belt or a chain, which is fixedly connected both to the first bumper bar (11) as well as to the second bumper bar (21) so as to bridge the clearance between the non-articulated end regions of the bumper bar (11, 21).

15. The shock absorber (100) according to any one of claims 11 to 14,
wherein the second end sections of the pendulum supports (23, 23) of the two energy-absorbing devices (10, 20) are connected to a common energy-absorbing element (40).

## Revendications

1. Dispositif de consommation d'énergie (10, 20) pour une sécurité antichoc (100) pour un véhicule guidé sur voie, en particulier un véhicule de type tramway, le dispositif étant conçu pour absorber ou dégrader au moins partiellement l'énergie d'un choc qui se produit lors d'une collision du véhicule contre un obstacle, **caractérisé en ce que** le dispositif de consommation d'énergie (10, 20) comprend :
- un arceau pare-chocs (11, 21), qui est susceptible d'être relié en pivotement avec le châssis de véhicule (102) via un premier palier (12, 22) ;
- un soutien pendulaire (13, 23) avec un premier et un second tronçon terminal, lequel est relié à l'arceau pare-chocs (11, 21) par le premier tronçon terminal via un second palier (14, 24) et susceptible d'être relié au châssis de véhicule (102) par le second tronçon terminal via un troisième palier (15, 25) de telle façon que l'arceau pare-chocs (11, 21) et le soutien pendulaire (13, 23) forment un trépied ; et
- un moyen de consommation d'énergie (16, 26, 30, 40), qui est réalisé et agencé de telle façon que lors d'un pivotement de l'arceau pare-chocs (11, 21) autour d'un axe de pivotement défini par le premier palier (12, 22), le moment des forces qui en résultent est injecté sous forme d'une force linéaire dans le moyen de consommation d'énergie (16, 26, 30, 40) et est absorbé ou dégradé au moins partiellement dans celui-ci.

2. Dispositif de consommation d'énergie (10, 20) selon la revendication 1, dans lequel le moyen de consommation d'énergie (16, 26, 30, 40) comprend au moins un premier élément de consommation d'énergie (16, 26), lequel est intégré dans le soutien pendulaire (13, 23) de telle façon que lors d'un pivotement de l'arceau pare-chocs (11, 21) autour d'un acte pivotement défini par le premier palier (12, 22), le moment des forces qui en résultent est injecté sous forme d'une force linéaire dans ledit au moins un élément de consommation d'énergie (16, 26).

3. Dispositif de consommation d'énergie (10, 20) selon la revendication 2, dans lequel ledit au moins un élément de consommation d'énergie (16, 26) est réalisé, lors de l'injection d'une force dans le premier élément de consommation d'énergie (16, 26), pour être sensiblement rigide jusqu'à une force caractéristique dont l'intensité est préalablement déterminable, et empêche ainsi un mouvement de pivotement de l'arceau pare-chocs (11, 21) autour d'un axe de pivotement défini par le premier palier (12, 22), et ledit au moins un premier élément de consommation d'énergie (16, 26) est en outre réalisé de telle manière et intégré dans le soutien pendulaire (13, 23) de telle façon qu'après dépassement de l'intensité de force caractéristique il se produit un raccourcissement de longueur du soutien pendulaire (13, 23), et ledit au moins un élément de consommation d'énergie (16, 26) permet, le cas échéant avec absorption simultanée d'énergie, un mouvement de pivotement de l'arceau pare-chocs (11, 21) autour de l'axe de pivotement.

4. Dispositif de consommation d'énergie (10, 20) selon la revendication 2 ou 3,
dans lequel ledit au moins un élément de consommation d'énergie (16, 26) est réalisé sous forme d'élément déformable réalisé de manière destructive, avec un comportement de réaction préalablement déterminable.

5. Dispositif de consommation d'énergie (10, 20) selon la revendication 2 ou 3,
dans lequel ledit au moins un élément de consommation d'énergie (16, 26) est réalisé de manière régénérative avec un comportement de réaction préalablement déterminable.

6. Dispositif de consommation d'énergie (10, 20) selon l'une des revendications précédentes, dans lequel le moyen de consommation d'énergie (16, 26, 30, 40) comprend au moins un second élément de consommation d'énergie (30, 40) susceptible d'être relié au châssis de véhicule (102), avec lequel est relié le second tronçon terminal du soutien pendulaire (13, 23) via le troisième palier (15, 25) de telle façon que lors d'un pivotement de l'arceau pare-chocs (11, 21) autour d'un axe de pivotement défini par le premier palier (12, 22), le moment des forces qui en résultent est injectées au moins partiellement sous forme d'une force linéaire via le soutien pendulaire (13, 23) dans ledit au moins un second élément de consommation d'énergie (30, 40).

7. Dispositif de consommation d'énergie (10, 20) selon l'une des revendications précédentes, dans lequel le moyen de consommation d'énergie (16, 26, 30, 40) comprend au moins un troisième élément de consommation d'énergie qui est relié au troisième palier (15, 25) via un élément de transmission de force.

8. Dispositif de consommation d'énergie (10, 20) selon l'une des revendications précédentes, qui comprend en outre une surface de contact (18, 28) reliée à l'arceau pare-chocs (11, 21) pour l'injection de forces de choc dans l'arceau pare-chocs (11, 21), ladite surface de contact (18, 28) comprenant au moins une région avec un contour extérieur réalisé sous forme convexe.

9. Dispositif de consommation d'énergie (10, 20) selon la revendication 8, dans lequel ladite au moins une région de la surface de contact (18, 28) est réalisée sous forme d'arc circulaire, dont le centre est situé sur un axe de pivotement défini par le second palier (14, 24).

10. Dispositif de consommation d'énergie (10, 20) selon la revendication 8 ou 9,
dans lequel la surface de contact (18, 28) comprend au moins une région (19, 29) avec un profilage pour mettre à disposition une protection anti-chevauchement.

11. Sécurité antichoc (100) pour la région antérieure ou la région postérieure d'un véhicule guidé sur voie, en particulier d'un véhicule de type tramway, qui comprend un premier et un second dispositif de consommation d'énergie (10, 20), chacun selon l'une des revendications précédentes, dans laquelle les dispositifs de consommation d'énergie (10, 20) sont susceptibles d'être reliés au châssis de véhicule (102) dans la région antérieure ou dans la région postérieure du véhicule, de préférence de manière symétrique par rapport à l'axe longitudinal (L) du véhicule, de telle façon que les arceaux pare-chocs (11, 21) correspondent au moins partiellement au contour extérieur (K) de la région antérieure ou de la région postérieure.

12. Sécurité antichoc (100) selon la revendication 11,
dans laquelle les arceaux pare-chocs (11, 21) sont conçus de telle façon qu'il se présente un espace libre entre les régions terminales des arceaux pare-chocs (11, 21) opposées au premier palier (12, 22) associé, et dans laquelle il est en outre prévu un système (50, 51, 52), qui est relié aux deux arceaux pare-chocs (11, 21) et qui coiffe l'espace libre entre les régions terminales non articulées, des arceaux pare-chocs (11, 21).

13. Sécurité antichoc (100) selon la revendication 12,
dans laquelle le système (50, 51, 52) comprend une poutre pare-chocs (50), qui est reliée via un quatrième palier (51) à l'arceau pare-chocs (11) du premier dispositif de consommation d'énergie (10) et via un cinquième palier (52) à l'arceau pare-chocs (21) du second dispositif de consommation d'énergie (20) de telle façon qu'une force de choc, qui se produit quand un objet entre en choc frontal contre la poutre pare-chocs (50), est transmise aux deux arceaux pare-chocs (11, 21) depuis la poutre pare-chocs (50) via les zones terminales fixées sur les arceaux pare-chocs respectifs (11, 21), et est ainsi injectée dans les deux dispositifs de consommation d'énergie (10, 20).

14. Sécurité antichoc (100) selon la revendication 12,
dans laquelle le système (50, 51, 52) comprend un élément souple vis-à-vis de la flexion, en particulier un câble, une courroie ou une chaîne, prévu entre les régions terminales non articulées des arceaux pare-chocs (11, 21), qui est fermement relié, pour coiffer l'intervalle libre entre les régions terminales non articulées des arceaux pare-chocs (11, 21), aussi bien avec le premier arceau pare-chocs (11) qu'avec le second arceau pare-chocs (21).

15. Sécurité antichoc (100) selon l'une des revendications 11 à 14, dans laquelle les seconds tronçons terminaux des soutiens pendulaires (13, 23) des deux dispositifs de consommation d'énergie (10, 20) sont reliés à un élément de consommation d'énergie (40) commun.
